# EUROPÄISCHE PATENTSCHRIFT

(11) **EP 1 066 986 B1**
(45) Veröffentlichungstag und Bekanntmachung des Hinweises auf die Patenterteilung: **03.01.2007**
(21) Anmeldenummer: 00112635.8
(22) Anmeldetag: 15.06.2000
(51) Int. Cl.: B60B 21/02, B60C 15/02, B60C 17/06, B60C 17/04

(54) **Felge eines Fahrzeugrades für schlauchlose Luftreifen mit auf der radial äusseren Mantelfläche der Felge ausgebildeter Notlaufstützfläche**
Rim of a motor vehicle wheel for tubeless tyres with an emergency support surface on the radial exterior part of the cylindrical surface of the rim
Jante d'une roue de véhicule pour pneumatiques sans chambre à air avec surface d'appui de sécurité sur la partie radiale extérieure de la surface cylindrique de la jante

(30) Priorität: 05.07.1999 DE 19930939
(43) Veröffentlichungstag der Anmeldung: 10.01.2001
(73) Patentinhaber: Continental Aktiengesellschaft, 30165 Hannover (DE)
(72) Erfinder: Frerichs, Udo, 30855 Langenhagen (DE)

(56) Entgegenhaltungen:
- EP-A- 0 152 567
- EP-A- 0 168 688
- DE-A- 3 417 528
- DE-A- 3 636 631
- DE-A- 19 624 766
- DE-A- 19 714 200

## Beschreibung

Die Erfindung betrifft ein Felge eines Fahrzeugrades für schlauchlose Luftreifen mit auf der radial äußeren Mantelfläche der Felge ausgebildeter Notlaufstüzfläche.

Schlauchlose Fahrzeugluftreifen moderner Bauart sind üblicherweise an den radial inneren Enden ihrer Seitenwände zu Wülsten ausgebildet. Von Reifenwulst zu Reifenwulst erstreckt sich eine aus mit Gummi beschichteten Festigkeitsträgern ausgebildete Karkasse radialer Bauart. In jedem Reifenwulst ist ein ringförmiger, konzentrisch zur Reifenachse angeordneter zugfester, steifer Wulstkern aus Stahl ausgebildet, in dem die Karkasse verankert ist. Der Fahrzeugluftreifen wird bei der Montage des Fahrzeugluftreifens auf der Felge mit seinem Wulst auf der radial äußeren Mantelfläche der Felge befestigt. Die hohe Zugfestigkeit und Steifigkeit des Wulstes, die durch die Zugfestigkeit und Steifigkeit des Wulstkerns bewirkt wird, sichert die beim schlauchlosen Reifen gewünschte Abdichtung in der Felgen-Reifenverbindung und sichert den dichten Sitz des Reifens auf der Felge im aufgepumpten Zustand des Reifens. Die zugsteife, zugfeste Ausbildung des Wulstkerns verhindert auch bei anspruchsvollen Fahrmanövern ein axiales Abrutschen des Fahrzeugrades von der Felge über das nach radial außen gerichtete Felgenhorn.

Zur Montage bzw Demontage des Fahrzeugluftreifens muß der zugfeste, zugsteife Wulst bei einer einteiligen Felge mit seinem Innendurchmesser über den gegenüber dem Innendurchmesser des steifen Wulstes größeren Außendurchmesser des Felgenhorns bewegt werden. Um dies zu ermöglichen ist zusätzlicher Aufwand, z.B. die Ausbildung der Felge mit einem Tiefbett, erforderlich.
Im Falle des Luftdruckverlustes knickt die Reifenseitenwand ein. Dabei kann sie auf das zur axialen Sicherung des Fahrzeugluftreifens auf der Felge ausgebildete Felgenhorn gepreßt werden. Bei Weiterfahrt des Fahrzeugs kann die Reifenseitenwand und das Felgenhorn zerstört werden. Der Fahrzeugluftreifen kann von der Felge springen.

Um dies zu verhindern und um ein sicheres Weiterfahren trotz Druckluftverlust zu ermöglichen, wurde vorgeschlagen auf der radialen Außenseite der einteiligen Felge die Feige mit zusätzlichen über das Felgenhorn radial hinausragenden Notlaufstützflächen auszubilden, auf denen sich der Fahrzeugluftreifen mit seiner radialen Innenseite seines Laufflächenbereichs bei Druckluftverlust abstützt und somit Notlaufeigenschaften nach Druckluftverlust gewährleistet. Die Montage und Demontage der Fahrzeugluftreifen auf derartige Felgen erweist sich als schwierig, da die zugfesten, steifen Wülste sogar über die noch größeren Außendurchmesser der Notlaufstützflächen bewegt werden müssen und die Notlaufstützflächen den zwischen den Wulstsitzflächen auf den Feigen zum Einsatz von Montagehilfen, z. B. für die Ausbildung eines Tiefbetts, zur Verfügung stehenden axialen Raum zusätzlich beschränken. Um den steifen, zugfesten Wulst überhaupt montieren zu können ist das ausführbare Verhältnis zwischen dem Aüßendurchmesser der Notlaufstützfläche zu dem Innendurchmesser des zugfesten, steifen Wulstes sehr begrenzt. Der Außendurchmesser der Notlaufstützfläche darf nur so groß gewählt werden, daß der steife Wulst noch darüber bewegt werden kann. Hierdurch werden die Notlaufstützflächen zu einem großen Teil vom vergleichsweise kleinen Innendurchmesser des steifen Wulstes und somit von einem für die Notlaufeigenschaften unerheblichen Parameter bestimmt. Über für optimale Notlaufeigenschaften abgestimmte größere Außendurchmesser der Notlaufstützflächen der Felgen lassen sich die Fahrzeugluftreifen nicht mehr montieren.

Von CTS-Reifen ist es bekannt, schlauchlose Fahrzeugluftreifen mit ihren Wülsten auf Stützflächen an der radial inneren Seite der mit an der radial äußeren Seite mit Notlaufstützflächen ausgebildeten, einteiligen CTS-Felge abzustützen. In jedem Reifenwulst ist ein ringförmiger, konzentrisch zur Reifenachse angeordneter zugfester, drucksteifer Wulstkern aus Stahl ausgebildet, in dem die Karkasse verankert ist. Der CTS-Fahrzeugluftreifen wird bei der Montage des Fahrzeugluftreifens auf der Feige mit seinem Wulst auf der radial inneren Mantelfläche der Feige befestigt. Die hohe Zugfestigkeit und Drucksteifigkeit des Wulstes, die durch die Zugfestigkeit und Drucksteifigkeit des Wulstkerns bewirkt wird, sichert die beim schlauchlosen Reifen gewünschte Abdichtung in der Felgen-Reifenverbindung und sichert den dichten Sitz des Reifens auf der Felge im aufgepumpten Zustand des Reifens. Die drucksteife, zugfeste Ausbildung des Wulstkerns verhindert auch bei anspruchsvollen Fahrmanövern ein axiales Abrutschen des Fahrzeugrades von der Feige über das auf der radial inneren Seite der Felge nach radial innen gerichtete Felgenhorn. Ein solcher Reifen ist beispielsweise aus der DE-30 00 428 C2 bekannt.

Da sowohl der Felgensitz als auch das Felgenhorn auf der radial inneren Seite der Felge ausgebildet sind, steht bei einem CTS-Reifen ein größerer axialer Erstreckungsbereich zur Ausbildung von Notlaufstützflächen auf der radial äußeren Mantelfläche der Felge zur Verfügung als bei dem an der radial äußeren Mantelfläche einer Felge herkömmlich befestigten Reifen-Rad-System. Das Felgenhorn stellt auf der radial äußeren Seite der CTS-Felge keinen den Notlauf störendes Felgenelement mehr dar.

Zur Montage bzw Demontage des CTS-Fahrzeugluftreifens muß der zugfeste, drucksteife Wulst mit seinem Innendurchmesser auf der radial äußeren Mantelfläche der Felge über den gegenüber dem Innendurchmesser des steifen Wulstes größeren Außendurchmesser der Notlaufstützflächen und auf der radial inneren Mantelfläche der Felge über den gegenüber dem Innendurchmesser des steifen Wulstes kleineren Innendurchmesser bewegt werden. Um dies zu ermöglichen, ist zusätzlicher Aufwand, zB die Ausbildung der Felge mit einem Hochbett auf der radial inneren Mantelfläche sowie aufwendige spezielle Montagetechniken, erforderlich.

Die Montage und Demontage der Fahrzeugluftreifen auf derartige Feigen erweist sich somit ebenso als schwierig, da auch die zugfesten, drucksteifen CTS-Wülste über die noch größeren Außendurchmesser der Notlaufstützflächen auf der radialen Außenseite der Felge und über den gegenüber dem Innendurchmesser des steifen Wulstes kleineren Innendurchmesser auf der radial inneren Mantelfläche der Felge bewegt werden müssen. Um den drucksteifen, zugfesten Wulst überhaupt montieren zu können, ist auch beim CTS-Reifen das ausführbare Verhältnis zwischen dem Außendurchmesser der Notlaufstützfläche zu dem Innendurchmesser des zugfesten, drucksteifen Wulstes noch sehr begrenzt. Der Außendurchmesser der Notlaufstützfläche darf nur so groß gewählt werden, daß der steife Wulst noch darüber bewegt werden kann. Hierdurch werden die Notlaufstützflächen auch beim CTS-Reifen noch zu einem großen Teil vom vergleichsweise kleinen Durchmesser des steifen Wulstkerns und somit von einem für die Notlaufeigenschaften unerheblichen Parameter bestimmt. Über für optimale Notlaufeigenschaften abgestimmte größere Außendurchmesser der Notlaufstützflächen der Felgen lassen sich die Fahrzeugluftreifen mit ihren steifen Wülsten nicht mehr montieren.

Aus der DE 19530939 C1 ist ein Fahrzeugrad mit einteiliger Felge und schlauchlosem, wulstlosem Luftreifen bekannt, bei dem die radial äußere Mantelfläche der Felge mit Notlaufstützflächen ausgebildet ist. Der wulstlose Fahrzeugluftreifen ist an der radial innenliegenden Mantelfläche der Felge anvulkanisiert. Die wulstfreie Ausbildung des Fahrzeugluftreifens ermöglicht bei einem solchen Reifen die Ausbildung der Notlaufstützflächen unabhängig von Wulstdurchmessern. Zur Ausbildung der Notlaufstützflächen können bei einem derartigen Fahrzeugluftreifen für den Notlauf wichtige Parameter besser berücksichtigt werden, so daß auch zur Notlaufeigenschaftsoptimierung gewünschte größere Durchmesser der Notlaufstützflächen einfach realisiert werden können. Allerdings können solche Fahrzeugluftreifen nicht ohne weiteres zerstörungsfrei demontiert oder gewechselt werden.

Es ist bekannt Notlaufstützflächen als Gummiring auszubilden, der auf einer tragenden Oberfläche aus Metall befestigt wird. Hierzu wird der Gummiring auf die tragenden Oberfläche axial aufgeschoben und dann formschlüssig oder reibschlüssig befestigt. Der Gummiring muß im montierten Zustand im Fahrzeugrad sicher und genau positioniert sein und auch während des Notlaufbetriebs bleiben. Hierzu muß er beim Aufbringen exakt positioniert werden und sicher in dieser Position fixiert werden. Zum Aufschieben muß jedoch zwischen Gummiring und tragender Oberfläche Spiel vorliegen. Diese sich widersprechenden Anforderungen für die Montage des Gummirings und für den Betrieb erfordern erheblichen Aufwand für die Montage und die Sicherstellung der Befestigung des Gummirings auf der tragenden Oberfläche.

Aus der DE 34 17 528 A1 ist eine Felge eines Fahrzeugrades bekannt, bei der die Notlaufstützfläche aus einem Gummiring ausgebildet ist, der auf dem Außenumfang der Felge aufvulkanisiert ist.

Aus der gattungsgemäßen DE 36 36 631 A1 ist es bekannt, einen Notlaufstützschlauch im Tiefbett einer Felge auszubilden und zusätzlich ergänzend radial außerhalb des Stützschlauches eine Stützplatte auszubilden, die am Stützschlauch befestigt ist. Zusätzlich kann diese Stützplatte seitlich außerhalb des Stützschlauches an der Felge befestigt sein. In Alternative können weitere Stützplatten seitlich des Stützschlauches auf der Felge befestigt sein. Die Ausbildung ist sehr aufwendig.

Der Erfindung liegt die Aufgabe zugrunde, die Notlaufstüzfläche eines Fahrzeugrades für schlauchlose Luftreifen in einfacher und zuverlässiger Weise auszubilden.

Die Aufgabe wird erfindungsgemäß durch die Ausbildung einer Felge gemäß den Merkmalen des Anspruchs 1, sowie durch die Ausbildung eines Fahrzeugrades gemäß den Merkmalen von Anspruch 8 oder durch das Verfahren gemäß den Merkmalen von Anspruch 19 gelöst.

Die Notlaufstützfläche kann in einfacher Weise im plastisch verformbaren Zustand sehr genau auf der tragenden Oberfläche positioniert und bei der Vulkanisation durch Anvulkanisation an die tragende Oberfläche in dieser Position sicher fixiert werden, so daß die Notlaufstützfläche auch während des Betriebs im Notlauf mit hoher Sicherheit seine genau definierte Position auf der Felge zuverlässig beibehält. Die Ausbildung gewährt eine Notlaufstützfläche mit hoher Festigkeit.

Besonders vorteilhaft mit Bandagewirkung ist die Ausbildung gemäß den Merkmalen von Anspruch 20. Die Festigkeitsträger sind bevorzugt gemäß den Merkmalen von Anspruch 2 ausgebildet. Bevorzugt werden die Festigkeitsträger aus Nylon oder einem anderen geeigneten wärmeschrumpffähigen Material ausgebildet, das durch die Wärmeeinwirkung während der Vulkanisation schrumpft und dadurch Vorspannung aufbaut. Die Ausbildung gemäß den Merkmalen von Anspruch 3 ermöglicht es einfach zu gewährleisten, daß die Notlaufstützfläche besonders zuverlässig auch den bei hohen Betriebsgeschwindigkeiten auftretenden Fliehkräften entgegenwirkend sicher ihre Form beibehält. Die Ausbildung gemäß Anspruch 4 ermöglicht in einfacher Weise die maschinell gleichmäßige Herstellung bei gleichzeitigem Einsatz von minimaler Zahl von beim Auflegen zu sichernder Enden von Festigkeitsträgern. Besonders vorteilhaft ist die Ausbildung gemäß den Merkmalen von Anspruch 5. Mit nur wenigen Bauteilen kann in einfacher Weise sicher und zuverlässig eine Notlaufstützfläche im Fahrzeugrad geschaffen werden. Gewicht und Aufwand zum Herstellen eines Fahrzeugrads mit Notlaufstützfläche können hierdurch minimiert werden. Noch weiter läßt sich der Aufwand durch die Ausbildung gemäß den Merkmalen von Anspruch 6 reduzieren. Die Ausbildung der Felge gemäß den Merkmalen von Anspruch 7 ermöglicht in einfacher und zuverlässiger Weise die Befestigung des Reifenwulstes von axial außen und gleichzeitig die Nutzung der radial nach außen weisenden Mantelfläche der Felge zur optimalen Ausbildung einer Notlaufstützfläche.

Eine besonders vorteilhafte Ausbildung eines Fahrzeugrades ist die Ausbildung gemäß den Merkmalen von Anspruch 9. Zur Befestigung des Reifens auf der Felge wird der Wulst in die Ringkammer axial durch die Durchgangsöffnung eingeführt. Der Füllring wird radial innerhalb des Wulstes axial in die Ringkammer eingeführt. Der Wulst ist dann in der Ringkammer auf der radialen Außenseite des Füllrings radial fest gelagert und formschlüssig nach radial außen, nach axial innen und nach axial außen zur Ringkammer ausgebildet, sodaß der Wulst nach radial außen, nach axial außen, nach axial innen und über den Füllring nach radial innen formschlüssig mit der einstückig ausgebildeten Ringkammer verbunden.
Während des Fahrzeugradbetriebes besteht sowohl im Normal- als auch im Notlaufbetrieb nach Druckluftverlust ein sicherer Formschluß nach axial außen und innen und nach radial außen und innen zwischen einstückiger Ringkammer der Felge und Wulst. Sowohl die axialen als auch die radial auf den Wulst wirkenden Kräfte werden somit sicher in die im Befestigungsbereich einstückige Felge eingeleitet. Auf diese Weise kann der Wulst sogar im Notlaufbetrieb sicher und zuverlässig seine Betriebsposition in der Ringkammer beibehalten.

Besonders sicher ist die Krafteinleitung vom Wulst in die Felge, wenn der Wulst über seine ganze axiale Erstreckung nach radial innen vollständig auf dem Füllring aufliegt. Wenn der Wulst und der Füllring die Ringkammer vollständig ausfüllen, wird ein besonders zuverlässiger Formschluss zwischen Wulst und Felge erzielt.

Bevorzugt ist eine Ausbildung, bei der in der Ringkammer der Wulst auch in axialer Richtung nach innen Formschluß zu der axial inneren Ringkammerwand aufweist, so daß die Lage des Wulstes in der Ringkammer durch Formschluß in axialer Richtung nach axial innen zur axial inneren Ringkammerwand auch im individuellen Einzelfall nicht auszuschließenden stärkeren in den Wulst eingeleiteten axial nach innen gerichteten Krafte definiert aufrechterhalten werden kann.

Bevorzugt ist der Füllring an seiner radial äußeren Mantelfläche zylindrisch ausgebildet. Dies ermöglicht eine besonders einfache und zuverlässige Montage und Demontage des Fahrzeugluftreifens auf der Felge. Nachdem der Wulst in seine Befestigungsposition in der Ringkammer eingeführt worden ist, wird er durch einfaches axiales Verschieben des Füllrings auf der hierzu ausgebildeten Lagerfläche der Ringkammer in seine Füllposition in der Ringkammer geschoben, wodurch der Formschluß des Wulstes in der Ringkammer hergestellt und gesichert wird. Durch einfaches axiales Herausziehen des Füllrings aus seiner Füllposition wird der Formschluß aufgehoben, so daß der Wulst aus der Ringkammer entfernt und der Fahrzeugluftreifen von der Felge demontiert werden kann. Die zylindrische Ausbildung stellt darüber hinaus zusätzlich sicher, daß die Gefahr von unbeabsichtigtem Lösen des Füllrings aus der Ringkammer aufgrund von ungewünscht eingeleiteten axialen Kräften vom Reifenwulst in den Füllring zuverlässig minimiert wird.

Bevorzugt ist die Ausbildung gemäß den Merkmalen von Anspruch 10. Der in seiner Umfangslänge - insbesondere elastisch - veränderbare Wulstkern ermöglicht die Montage des Wulstes durch Bewegung über die Notlaufstützfläche mit einem größeren Wulstkerndurchmesser als im befestigten Betriebszustand des Wulstes und zur Bewegung über das Felgenhorn mit einem kleineren Wulstkerndurchmesser als im befestigten Betriebszustand, sodaß die Ausbildung der Notlaufstützflächen nicht mehr in Abhängigkeit vom Durchmesser des Wulstkerns im Betriebszustand und vom inneren Felgenhorndurchmesser, sondern in erster Linie optimalen Notlaufeigenschaften entsprechend ausgebildet werden kann. Der in seiner Umfangslänge veränderbare Wulst kann somit in einfacher und funktionssicherer Weise sowohl montiert als auch demontiert werden wobei sowohl die Nottaufstüzflächen für den Notlauf optimiert als auch das Felgenhorn hinsichtlich der axialen Stütze für den Wulst und der Wulstkern in seinem Betriebszustand hinsichtlich seiner Eigenschaften im Betriebszustand optimiert werden können.

Durch Ausbildung des Fahrzeugluftreifens mit elastisch veränderbarer Umfangslänge des Wulstes ist besonders einfach und sicher eine Umfangslängenveränderung von einer ersten Umfangslänge zu individuell entsprechend den jeweiligen Erfordernissen geänderten weiteren Umfangslängen entgegen der Wirkung rückstellender Kräfte und wieder zurück in die erste Umfangslänge unter Ausnützung der rückstellenden Kräfte erzielbar.

Bevorzugt ist die Ausbildung gemäß den Merkmalen von Anspruch 11 zur Erzielung besonders guter Notlaufeigenschaften, da der Laufstreifen trotz optimaler Abstandsbreite der zwischen den Reifenwülsten des Fahrzeugluftreifens gerade in den besonders kritischen Schulterbereichen ausreichend gestützt werden kann. Besonders vorteilhaft ist es, zur Stützung der im Notlauf besonders kritischen Schulterbereiche auf den axialen Seitenbereichen der radial äußeren Mantelfläche der Felge jeweils eine Notlaufstützfläche auszubilden.

Besonders vorteilhaft ist eine Ausbildung des Fahrzeugrades, bei dem der Wulstkern ein im Wulst integriert ausgebildeter Gummikern ist. Der Gummikern ist einfach herzustellen und kann besonders einfach und zuverlässig im Wulst verankert werden. Der Wulst kann hierdurch in einfacher, zuverlässiger Weise in seiner Umfangslänge elastisch dehnbar ausgebildet werden. Für einen besonders sicheren Sitz ist der Gummikern mit einer Shore - A- Härte aus dem Bereich von 80 bis 100 - bevorzugt aus dem Bereich zwischen 85 bis 90 - ausgebildet.

In einer anderen Ausbildungsform des Fahrzeugrades ist der Wulst vollständig kernlos ausgebildet. Der Wulst ist besonders einfach ohne zusätzlichen Aufwand für einen Kern herzustellen, ist durch sein kernloses Gummimaterial in seiner Umfangslänge ausreichend elastisch dehnbar auszubilden und kann dennoch sicher und zuverlässig durch den Formschluß in der Ringkammer verankert werden.

Bevorzugt ist das Fahrzeugrad derart ausgebildet, daß die axial äußere Stirnfläche als eine axiale Auflagefläche zur axialen Stütze der unteren Reifenseitenwand ausgebildet ist. Auf diese Weise ist der Reifen bei Kurvenfahrten im unteren Seitenwandbereich zur Erzielung guter Handlingeigenschaften axial gestützt und kann bei besonderen Stoßbelastungen unter Aufhebung der axialen Stützwirkung bis in den unteren Seitenwandbereich zur Erzielung guter Komforteigenschaften einfedern.

Durch die Ausbildung eines Fahrzeugrades, bei dem der größte Außendurchmesser der Notlaufstützflächen um einen Faktor zwischen 1,05 und 1,3 größer als der Innenringdurchmesser des Wulstkerns im montierten Zustand des Fahrzeugrades beträgt, ermöglicht optimale Notlaufeigenschaften durch besonders großen Außendurchmesser der Notlaufstützflächen bei Beibehaltung der zur Erzielung guter Einfederung des Reifens und somit guter Komforteigenschaften optimaler kleiner Innenringdurchmesser des Wulstkerns. Die Ausbildung eines Fahrzeugrades, bei dem der größte Außendurchmesser der Notlaufstützflächen um einen Faktor zwischen 1,1 und 1,2 größer als der Innenringdurchmesser des Wulstkerns im montierten Zustand des Fahrzeugrades beträgt, stellt einen opimale Ausbildungsbereich der Standardreifendimensionen zur Lösung der Zielkonflikte zwischen gute Notlaufeigenschften einerseits und Komfort und Gewicht des Fahrzeugrades andererseits dar.

Die Ausbildung eines Fahrzeugrades, bei dem der Wulstkern eine Dehnbarkeit und/oder Stauchbarkeit von 5 bis 30 % aufweist, ermöglicht eine einfache und zuverlässige Montage trotz optimaler Notlaufeigenschaften durch Ausbildung besonders großer Außendurchmesser der Notlaufstützflächen trotz Beibehaltung der Ausbildung der Erzielung guter Einfederung des Reifens und somit guter Komforteigenschaften durch optimal kleine Innenringdurchmesser des Wulstkerns. Durch einfaches - insbesondere elastisches - Dehnen und/oder Stauchen des Wulstes wird der Wulst jeweils auf den zur Montage bzw zur Demontage über die Notlaufstützflächen erforderlichen optimalen Durchmesser, auf den zur Montage bzw zur Demontage über das nach innen gerichtete Felgenhorn erforderlichen optimalen Durchmesser und auf den zum sicheren Sitz in der Ringkammer erforderlichen optimalen Durchmesser eingestellt. Die Ausbildung eines Fahrzeugrades, bei dem der Wulstkern eine Dehnbarkeit und/oder Stauchbarkeit von 10 bis 20 % ermöglicht eine einfache und zuverlässige Montage bei opimalem Ausbildungsbereich der Standardreifendimensionen zur Lösung der Zielkonflikte zwischen guten Notlaufeigenschaften einerseits und Komfort und Gewicht des Fahrzeugrades andererseits.

Bevorzugt ist die Ausbildung gemäß den Merkmalen von Anspruch 17, wonach der Wulstkern eine Dehnbarkeit von 5 bis 30 % und eine Stauchbarkeit von 1 bis 5% aufweist und wonach der Wulstkern insbesondere im montierten Zustand des Fahrzeugrades ungedehnt und ungestaucht ist. Durch einfaches - insbesondere elastisches - Dehnen aus dem ungedehnten und ungestauchten Zustand wird der Wulstkern auf einen zur Montage bzw Demontage über die Notlaufstützfläche optimal großen Durchmesser gebracht. Durch einfaches - insbesondere elastisches - Stauchen aus dem ungedehnten und ungestauchten Zustand wird der Wulstkern auf einen zur Montage bzw Demontage über das nach innen gerichtete Felgenhorn optimal kleinen Durchmesser gebracht. Die Ausbildung eines Fahrzeugrades, bei dem der Wulstkern eine Dehnbarkeit 10 bis 20 % und eine Stauchbarkeit von 2,5 bis 3,5 % aufweist, ermöglicht eine einfache und zuverlässige Montage bei opimalem Ausbildungsbereich der Standardreifendimensionen zur Lösung der Zielkonflikte zwischen guten Notlaufeigenschaften einerseits und Komfort und Gewicht des Fahrzeugrades andererseits.Besonders vorteilhaft ist es, wenn der Wulstkern im montierten Zustand des Fahrzeugrades ungedehnt und ungestaucht ist und somit in Umfangsrichtung weitgehend frei von in Umfangsrichtung wirkenden inneren Kräften ist. Besonders vorteilhaft ist hierbei die elastische dehnbare und elastisch stauchbare Ausbildung. Der Wulstkern wird aus dem ungedehnten und ungestauchten Zustand zur Montage über die Notlaufstützflächen den elastischen Rückstellkräften entgegenwirkend in Umfangsrichtung gedehnt. Nach der Montage über die Notlaufstützflächen wird er duch die Rückstellkräfte wieder in seiner Umfangslänge bis in den ungedehnten und ungestauchten Zustand verkleinert. Zur Montage über das radial nach innen gerichtete Felgenhorn wird der Wulstkern aus dem ungedehnten und ungestauchten Zustand den elastischen Rückstellkräften entgegenwirkend in Umfangsrichtung gestaucht. Nach der Montage über das Felgenhorn wird er in der Ringkammer duch die Rückstellkräfte wieder in seiner Umfangslänge bis in den ungedehnten und ungestauchten Zustand vergrößert. In entsprechenderweise erfolgt die Demontage.

Die Erfindung wird im folgenden anhand der in den Figuren 1 bis 6 dargestellten Ausführungsbeispiele näher erläutert. Hierin zeigen
- Fig. 1: eine Querschnittsdarstellung eines erfindungsgemäßen Fahrzeugrades mit montiertem Fahrzeugreifen,

- Fig. 2: Querschnittsdarstellungen von Ausführungsformen des Füllrings,
- Fig. 3: Querschnittsdarstellungen von Ausführungsformen des Wulstbereichs,
- Fig.4: schematische Darstellung zur Erläuterung der Montage und der Demontage,
- Fig.5: Darstellung der Notlaufstützfläche und
- Fig.6: schematische Darstellung zur Erläuterung der Herstellung der Notlaufstützfläche.

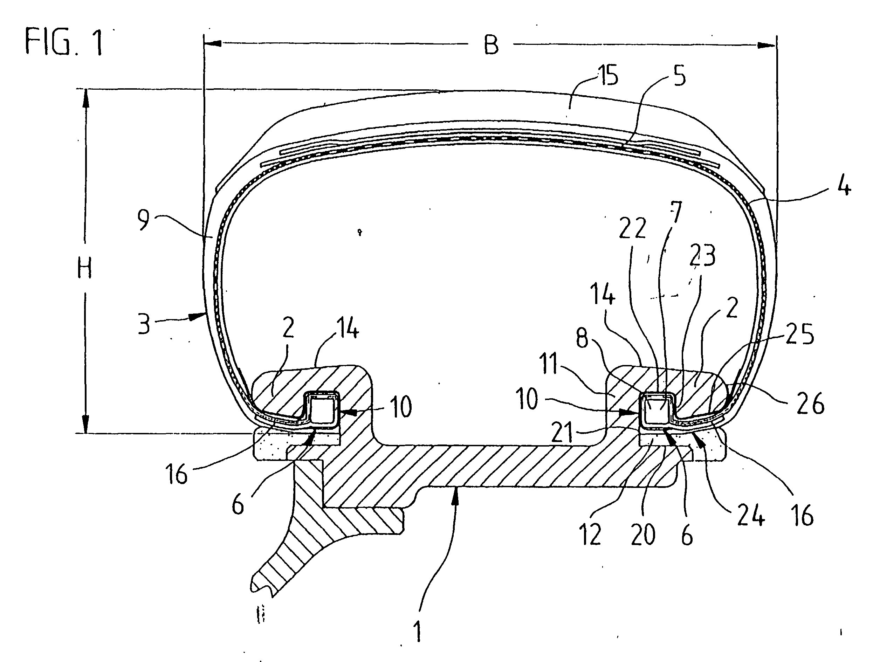

Fig. 1 zeigt ein Fahrzeugrad mit Fahrzeugluftreifen 3 und Felge 1 mit einem Verhältnis von maximaler Höhe H zu maximaler Breite B des Fahrzeugluftreifens H/B ≤ 0,6. Der Fahrzeugluftreifen 3 weist eine über den Umfang des Reifens und vom linken Wulstbereich 6 des Fahrzeugluftreifens zum rechten Wulstbereich 6 reichende, nicht näher dargestellte, Innenschicht auf, über die eine Karkasse 4 radialer Bauart mit beispielsweise einer oder zwei Karkassenlagen aufgebaut ist. Im Bereich der Lauffläche ist radial außerhalb der Karkasse 4 ein Gürtel 5 bekannter Bauart mit beispielsweise zwei Gürtellagen aus in Kautschuk eingebetteten Festigkeitsträgern, z.B. aus Stahlcord, aufgelegt. Der Gürtel reicht über den gesamten Umfang des Reifens hinweg und erstreckt sich in axialer Richtung von einem Reifenschulterbereich in den anderen.

Die Stahlcorde verlaufen im spitzen Winkel von beispielsweise 10-30 ° zur Umfangsrichtung. Radial außerhalb der Gürtellagen ist es denkbar, eine nicht dargestellte Gürtelbandage mit im wesentlichen zur Umfangsrichtung verlaufenden Festigkeitsträgern, beispielsweise aus Nylon, aufzuwickeln.

Radial außerhalb des Gürtels bzw. der Gürtelbandage ist in bekannter Weise ein über den Umfang des Reifens reichender und sich von Schulterbereich zu Schulterbereich erstreckender Laufstreifen 15 aus Kautschukmaterial aufgelegt. Im Seitenwandbereich 9 ist Kautschukmaterial auf die Karkasse 4 aufgelegt. Das Seitenwandkautschukmaterial reicht vom Schulterbereich bis zum Wulstbereich 6.

Die einstückig ausgebildete Feige 1 ist an ihren beiden axialen Stirnseiten jeweils mit einer konzentrisch zur Felge angeordneten Ringkammer 10 mit einer radial inneren Ringkammerwand 20, einer axial inneren Ringkammerwand 21, einer radial äußeren Ringkammerwand 22 und einer axial äußeren Ringkammerwand 23 einstückig ausgebildet. Die Ringkammerwand 23 begrenzt das radial nach innen gerichtete Felgenhorn 2. Axial nach innen zwischen Felgenhorn 2 und radial innerer Ringkammerwand 20 ist eine ringförmige Durchgangsöffnung 24 von axial außen zur Ringkammer hin ausgebildet. Das Felgenhorn 2 ist an seiner radial nach innen gerichteten Seite 25 von axial innen nach axial außen konisch erweitert und an seiner Stirnfläche 26 gekrümmt ausgebildet. Auf der radial äußeren Seite des Felgenhorn erstreckt sich ein Notlaufsattel 11 mit seiner Notlaufsatteloberfläche 14 nach axial innen über die Position der Ringkammer 10 hinweg. Jede Notlaufsatteloberfläche erstreckt sich soweit nach axial innen, daß der Gürtel in seinen axialen Randzonen von der Schulter jeweils mit 10 bis 30 %, beispielsweise 25%, axial überdeckt ist.

Der Fahrzeugluftreifen 3 umgreift mit seinen unteren Seitenwandbereichen 16 die nach radial innen erstreckten Hörner 2. Die Krümmung der Stirnfläche 6 des Horns entspricht der gewünschten Reifenkontur im Bereich des Horns.

Am Ende des unteren Seitenwandbereiches 16 ist jeweils der Wulstbereich 6 mit zur Innenseite des Reifens ausgebildeter wulstartiger Verdickung 7 ausgebildet. Der Wulst ist mit einem in das Karkassenlagenende eingebetteten elastisch dehnbaren und elastisch stauchbaren Kern 8 ausgebildet. Im montierten Zustand gemäß Fig. 1 füllt der Wulstbereich 6 unter Formschluß zur axial inneren Ringkammerwand 21 und zur radial äußeren Ringkammerwand 22 sowie zur axial äußeren Ringkammerwand 23 ca. 1/2 bis 2/3 des Ringkammerraums. Radial innerhalb des Wulstes ist ein Füllring 12 radial formschlüssig zum Wulstbereich 6 nach radial außen und nach radial innen zur radial inneren Ringkammerwand 20 ausgebildet, der sich in axialer Richtung von der Ringkammerwand 10 über die gesamte axiale Erstreckung des Wulstbereichs 6 durch die Ringöffnung 24 hindurch nach axial außen erstreckt. Der Füllring 12 ist über den gesamten axialen Erstreckungsbereich der Ringkammer und somit des Wulstes an seiner radial äußeren Mantelfläche zylindrisch und axial außerhalb der Ringkammer parallel zur radial inneren Seite des Felgenhorns 25 konisch erweitert ausgebildet. In der Ausführung von Fig.1 erstreckt sich der Füllring 12 in axialer Richtung bis hin zur axialen Position der Stirnseite 26 des Felgenhorns. Der Wulst steht in der Ausführung gemäß Fig. 1 unter Formschluß nach radial außen, nach axial innen und nach axial außen zu den geschlossenen Ringkammerwänden 22, 23, 21 und durch den radialen Formschluß zum Füllring 12, der seinerseits in radialem Formschluß zur geschlossenen Ringkammerwand 20 ausgebildet ist, auch zur Ringkammerwand 20 in radialem Formschluß. Da der Wulst auf seiner gesamten Oberfläche in formschlüssigem Berührkontakt zur einstückig ausgebildeten Ringkammer bzw. zum Füllring 12 und der Füllring 12 innerhalb der Rinkammer seinerseits mit seiner Oberfläche in vollständigem Berührkontakt zu den Ringkammerwänden bzw. zum Wulst ausgebildet ist, ist die Ringkammer vollständig von Wulst und Füllring ausgefüllt. Darüber hinaus steht der untere Seitenwandbereich 16 mit der radial inneren konischen Felgenhornseite 25 und mit der korrespondierend ausgebildeten konischen äußeren Mantelfläche des Füllrings 12 auch im axialen Erstreckungsbereich des Felgenhorns in vollständigem Berührkontakt.

Der vollständige Formschluß des Wulstes zur Felge sichert den Sitz des Reifens auf der Felge während des Fahrens.

Im Bereich der Stirnfläche 26 des Horns 2 der Felge liegt die Reifenseitenwand jeweils lediglich unter Vorspannung an.

Bei Auflage eines Umfangselementes des Reifens auf die Straßenoberfläche wirken resultierende Normalkräfte F zwischen Fahrzeugluftreifen und Straßenoberfläche. Bei der Eindämpfung dieser Kräfte wirkt auf die Seitenwände 9 des Reifens eine resultierende Kraft F_{A}, die im wesentlichen in axialer Richtung wirkt und die Seitenwand leicht weiter verkrümmt. Aufgrund der gewählten Vorspannung zwischen Stirnfläche 26 und Reifen liegt der Reifen in diesem Normallastfall unter Reduzierung der Vorspannung immer noch an der Stirnfläche 26 an. Bei Kurvenfahrten wird im Bereich der besonders stark belasteten Kurvenaußenseite aufgrund der eingeleiteten Kräfte die Vorspannung zwischen Stirnfläche 26 und Reifenseitenwand erhöht. Der Fahrzeugluftreifen 3 wird somit an der besonders stark belasteten Seite durch das Horn versteift. Ein sicheres Handling ist gewährleistet.

Bei starken Stoßwirkungen auf den Reifen wirken stärkere resultierende Kräfte F_{A} auf die Reifenseitenwände. Diese beulen weiter nach axial außen bei der Eindämpfung aus. Der für die flexible Krümmung der Seitenwand hierzu zur Verfügung stehende Seitenwandbereich reicht dabei vom Schulterbereich des Laufstreifens bis über den gesamten gekrümmten Bereich der Stirnfläche 26. Bei starken Stößen hebt die Reifenseitenwand 9 im Bereich der Stirnfläche 26 unter Bildung eines Spaltes zwischen Stirnfläche 26 und Reifenseitenwand ab.

Auch besonders starke auf den Reifen einwirkende Stöße können aufgrund des großen Krümmungsradius R und der sehr langen für die Krümmung zur Verfügung stehenden Bogenlänge der Reifenseitenwand zwischen Reifenschulter und zylindrischer Felgenoberfläche unter geringer Flächenbeanspruchung der gekrümmten Seitenwandoberflächen sicher eingedämpft werden.

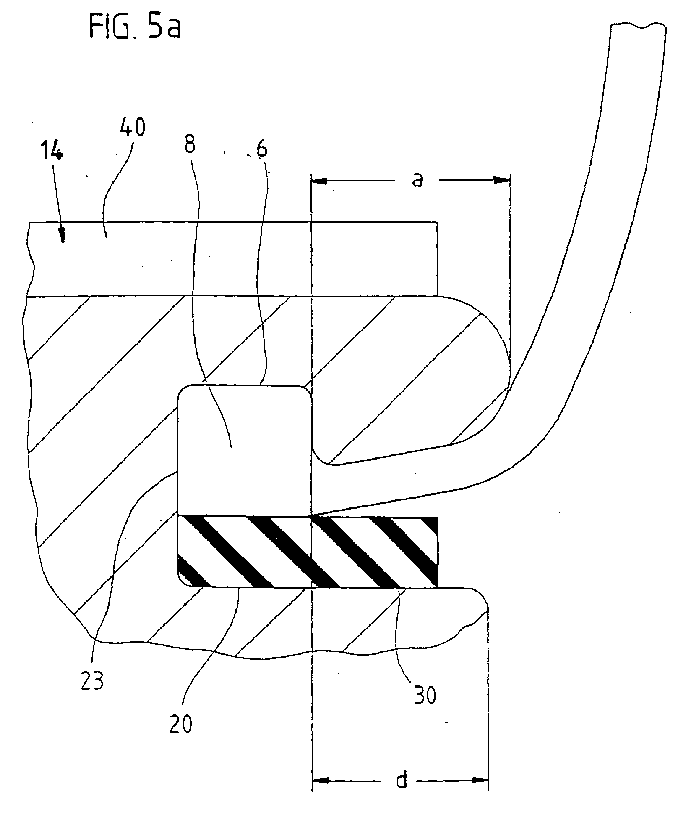

Der nach axial innen reichende Notlaufsattel 11 erstreckt sich über den gesamten Umfangsbereich des Reifens und ist, wie in Fig 5a dargestellt ist, mit einer sich über den Umfang erstreckenden Notlaufstützschicht 40 versehen. Bei plötzlichem Innendruckverlust stützt sich der Reifen mit seinem Laufstreifenbereich auf den beiderseitig vorgesehenen, mit im wesentlichen zylindrischer oder nach axial innen mit leicht konisch erweiterter Oberfläche mit einem Steigungswinkel von 0 bis 10 ° zur Achsrichtung ausgebildeten Notlaufstützschicht 40 des Notlaufsattels 11 ab. Frühzeitige Zerstörung und Ablösung des Reifens werden vermieden.

Die Notlaufstützschicht 40 ist aus hartem Kunststoff, Gummi oder Kunststoffschaum ausgebildet, das zur Dämpfung unempfindlich gegen Stöße ist und das gute Gleiteigenschaften für den Notlauf aufweist.

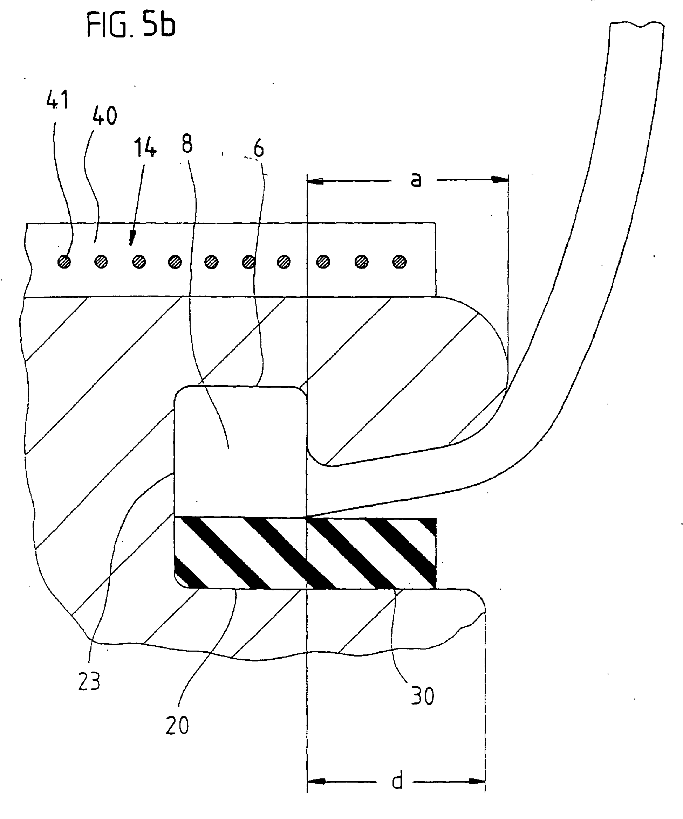

Fig.5b zeigt eine Ausführung einer derartigen Notlaufstützschicht 40, in der zusätzlich parallel zueinander angeordnete faden- oder bandförmige Festigkeitsträgern eingebettet sind. Diese Festigkeitsträger sind in dieser dargestellten Ausführung Monofilamente oder Multifilamente textiler Art - beispielsweise aus Nylon, Kevlar, Polyester - oder aus Stahl. Sie erstrecken sich über den Umfang der Felge und sind mit einem Winkel von 0 bis 30 ° zur Umfangsrichtung der Felge ausgerichtet.

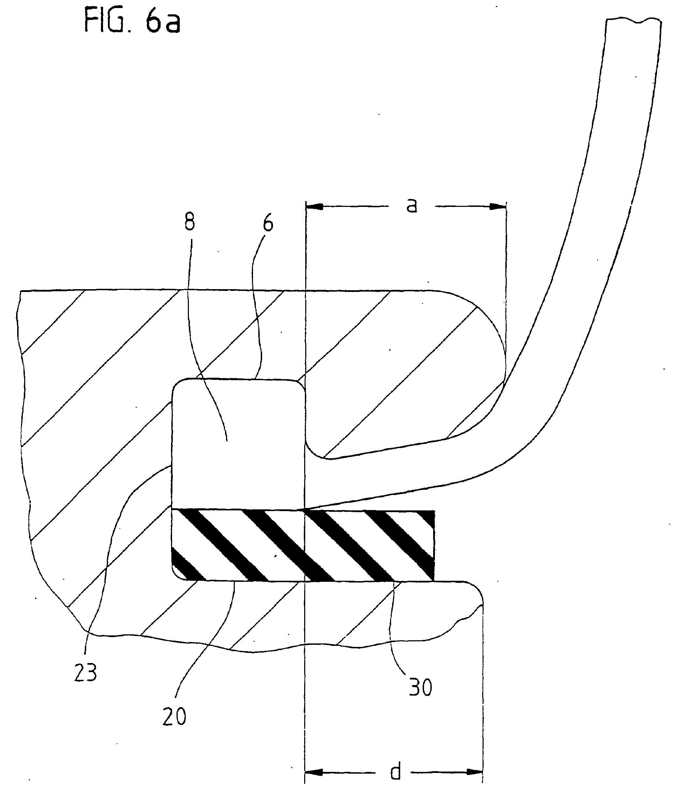

Fig. 6a bis d zeigt die Herstellung der Notlaufstützschicht 40 auf dem Notlaufsattel der metallischen Felge. Zunächst wird, wie in Fig.6a dargestellt ist, eine Lage 40' von plastisch verformbarem, unvulkanisiertes Kautschuk- bzw Kunststoffmaterial in der Betriebsposition der Notlaufstützfläche auf dem Notlaufsattel aufgelegt. Im Fall der Ausbildung gemäß Fig.5a Wird danach die Lage 40' von plastisch verformbarem, unvulkanisiertes Kautschuk- bzw Kunststoffmaterial vulkanisiert. Die fertig vulkanisierte Lage 40' von dämfendem Gummi - bzw Kunststoffmaterial bildet die für den Notlauf wichtige Notlaufstützfläche 40.

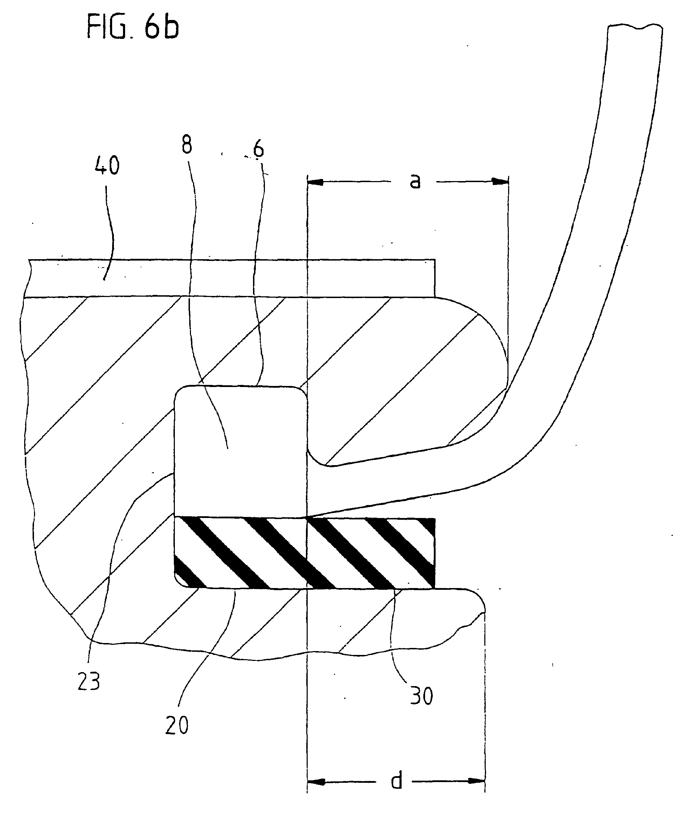

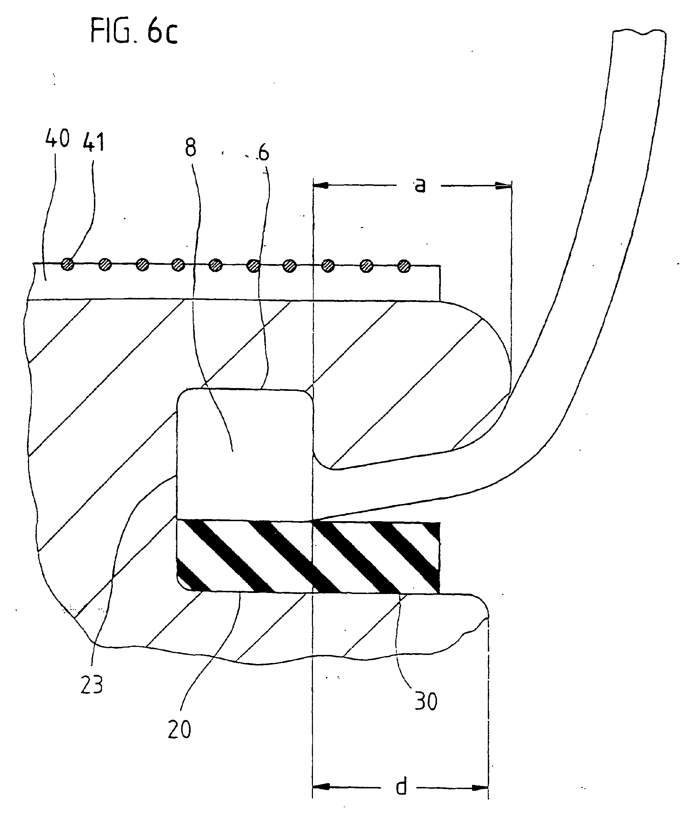

Im Fall der Ausbildung gemäß Fig.5b, werden, nachdem eine Lage 40' von plastisch verformbarem, unvulkanisiertes Kautschuk- bzw Kunststoffmaterial in der Betriebsposition der Notlaufstützfläche auf dem Notlaufsattel gemäß Fig.6a aufgelegt worden ist, zunächst - wie Fig6b zu entnehmen - auf diese Lage 40' Festigkeitsträger 41 aufgelegt. Dann wird - wie Fig6c zu entnehmen -auf diese Schicht Festigkeitsträger 41 eine weitere Lage 40'' aus plastisch verformbarem, unvulkanisiertes Kautschuk- bzw Kunststoffmaterial aufgelegt. Danach werden die Lage 40' und 40'' von plastisch verformbarem, unvulkanisiertes Kautschuk- bzw Kunststoffmaterial vulkanisiert. Die fertig vulkanisierten Lage 40', 40'' von dämfendem Gummi - bzw Kunststoffmaterial mit den darin eingebetteten Festigkeitsträgern 41 bilden die für den Notlauf wichtige Notlaufstützfläche 40.

Die Festigkeitsträger - beispielsweise metallische oder textile Monofilamente oder Multifilament bekannter Art - werden äquidistant zueinander oder soweit unterschiedliche Festigkeitverläufe der Notlaufstützfläche gewünscht sind mit diesen Festigkeitsverläaufen entsprechenden Abstandsdifferenzen aufgelegt. Sie erstrecken sich wenigstens über den gesamten Umfang der Felge mit einem Winkel von 0 bis 30 ° zur Umfangsrichtung der Felge. Es ist auch möglich, einen oder mehrere Festigkeitsträger - beispielsweise metallische oder textile Monofilamente oder Multifilament bekannter Art - kontinuierlich über den Umfang der Felge wendelförmig von der einen axialen Seite zur anderen axialen Seite mit einem spitzen Winkel von 0 bis 30 ° zur Umfangsrichtung der Feige aufzuwickeln.

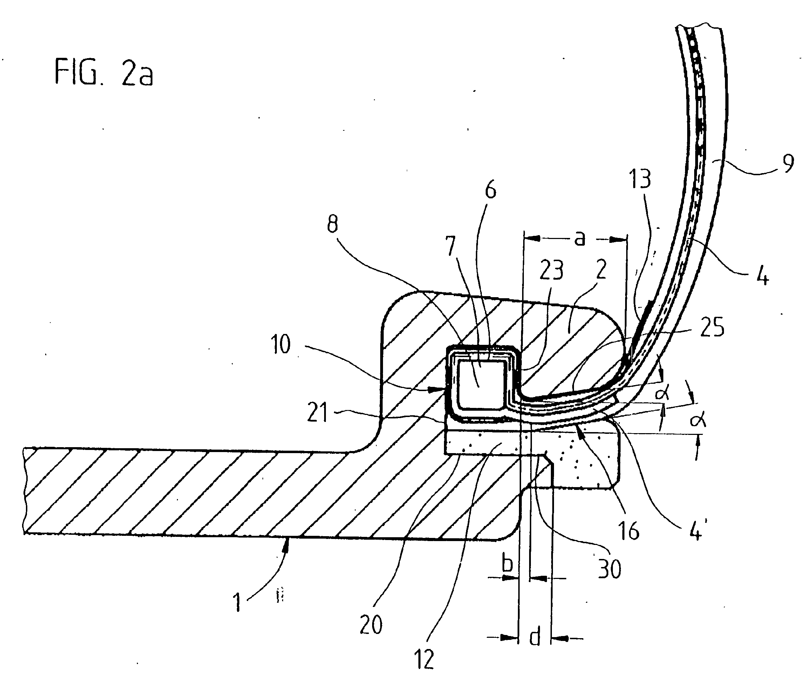

Fig. 2a zeigt eine vergrößerte Detaildarstellung des äußeren Randbereichs der Felge von Fig.1. In Fig.2a ist erkennbar, daß sich die Innenseite 25 des Felgenhorns von der Ringkammerwand 23 ausgehend unter Einschluß eines Winkels α zur Radachse nach axial außen hin bis zur gekrümmten Stirnfläche 26 des Felgenhorns 2 konisch erweitert. Die radial äußere Mantelfläche des Füllrings 12 ist von der Ringkammerwand 21 ausgehend über den gesamten axialen Erstreckungsbereich der Ringkammer hinweg bis zur Ringkammerwand 23 und in axialer Verlängerung aus der Ringkammer bis zu einem axialen Abstand b zur Ringkammerwand 23 zylindrisch ausgebildet. Ausgehend von einer Kreislinie im Abstand b zur Ringkammerwand 23 ist die radial äußere Mantelfläche des Füllrings 12 in axialer Richtung nach außen parallel zur Innenseite 25 des Felgenhorns ebenfalls unter Einschluß des Winkels α zur Radachse nach axial außen hin konisch erweitert ausgebildet. Der Füllring erstreckt sich ebenso wie das Felgenhorn noch über einen Abstand a von der Ringkammerwand 23 axial nach außen. Der Füllring 12 ist axial verschiebbar auf einer zylindrischen Lagerfläche 30 der Felge gelagert. Im Innern der Ringkammer bildet die Lagerfläche 30 die radial innere Ringkammerwand 20. Nach axial außen erstreckt sich die Lagerfläche 30 bis in einen Abstand d von der Ringkammerwand 23. Axial außerhalb des Abstandes d ist der Füllring nach radial innen zu einer Schulter verdickt ausgebildet und liegt mit dieser an einer korrespondierend ausgebildeten Schulter der Felge an. Die Abstände a,b,d sind so gewählt, daß a größer als d und d größer als b ist. Der Winkel α liegt zwischen 2 und 20 °. Im gezeichneten Ausführungsbeispiel liegt er bei ca. 10°. Auf diese Weise umschließen der Wulst mit seiner Verdickung 7 und der sich anschließende untere Seitenwandbereich 16 zwischen innerer Felgenhornfläche 25 und Füllring das Felgenhorn zwangsgeführt, wodurch die Verankerung des Reifens in der Felge zusätzlich gesichert wird.

Der Füllring ist aus Gummi oder aus einem elastischen Kunststoff mit selbsthemmender Oberfläche ausgebildet. Es ist auch denkbar, den Füllring aus einem nichtelastischen Kunststoff oder Metall herzustellen. Soweit im Einzelfall erforderlich, ist es auch möglich, den Füllring im montierten Zustand mit seiner Schulter an der korrespondierenden Schulter der Felge beispielsweise durch Verschraubung zusätzlich axial zu fixieren.

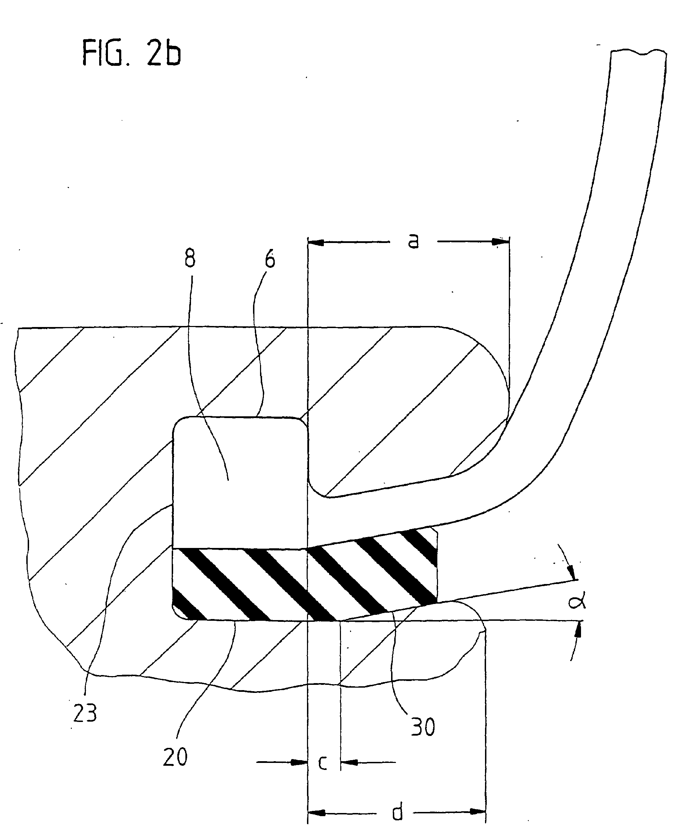

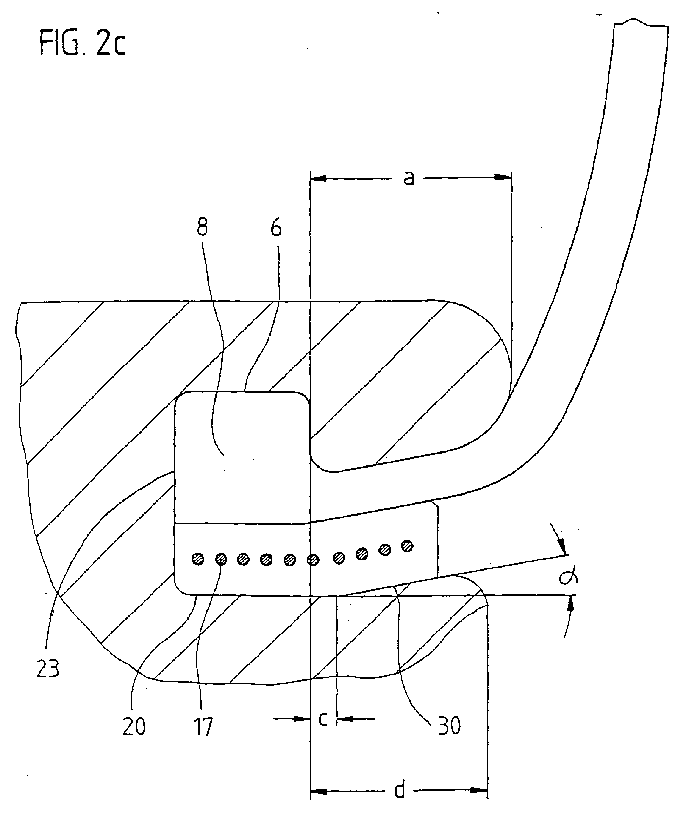

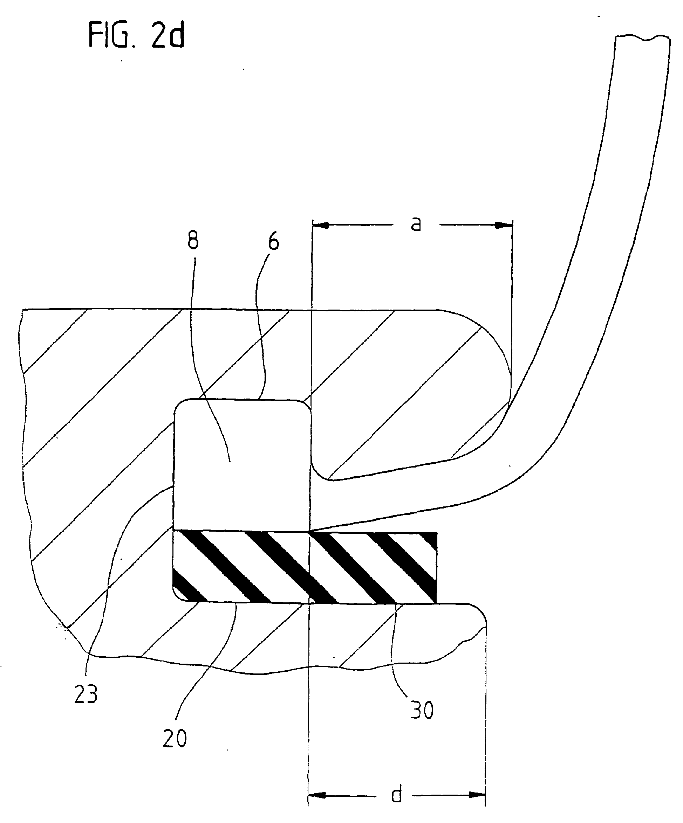

In den Fig.2b, 2c und 2d sind alternative Ausführungen des Füllrings 12 dargestellt. Die Lagerfläche 30 erstreckt sich axial bis zu einem Abstand c, der kleiner oder gleich dem Abstand a ist, von der Ringkammerseitenwand 23 nach außen. Die radial äußere Mantelfläche des Füllrings ist ab der axialen Position der Ringkammerseitenwand 23 ebenfalls konisch unter dem Steigungswinkel α verlaufend ausgebildet. Die radial Innere Mantelfläche des Füllrings ist ebenso wie die korrespondierend ausgebildete Lagerfläche 30 ab einer axialen Position im Abstand c von der Ringkammerseitenwand nach axial außen ebenso unter dem Winkel α zur Radachse konisch erweitert ausgebildet. Der Abstand c ist kleiner a. Durch diese konische Ausbildung wird der elastische Füllring in seiner montierten Position zusätzlich durch axialen Formschluß gesichert.

In Fig2c ist ein Füllring wie in Fig2b dargestellt, der jedoch im elastischen Gummi- oder Kunststoffmaterial eingebettete im wesentlichen in Umfangsrichtung verlaufende Festigkeitsträger 17 enthält. Die Festigkeitsträger geben dem Füllring zusätzlichen Halt auf der Lagerfläche 30. Die Festigkeitsträger 17 können mehrere nebeneinander angeordnete in Umfangsrichtung gewickelte zugfeste Festigkeitsträger sein. In einer anderen Ausführung ist ein oder mehrere nebeneinander angeordnete Festigkeitsträger kontinuierlich wendelförmig um die Achse des Füllrings von einem axialen Ende zum anderen axialen Ende des Füllrings gewickelt. Die Abstände zwischen den benachbarten Wicklungen sind äquidistant. Soweit zur Erzielung einer noch sichereren Fixierung des Füllrings auf der Lagerfläche 30 sinnvoll, können die Abstände auch unterschiedlich gewählt sein. Die Festigkeitsträger sind Monofilamente oder Multifilamente aus Stahl. In einer anderen Ausführung sind die Festigkeitsträger textile Monofilamente oder Multifilamente. Es ist auch denkbar die Festigkeitsträger 17 aus Gewebestreifen auszubilden. Die Verstärkung des Füllrings 12 durch Festigkeitsträger in der beschriebenen Art ist auch beim Ausführungsbeispiel von Fig.2a möglich.

Fig. 2d zeigt einen Füllring, der über seine gesamte axiale Erstreckung eine zylindrische radial äußere Mantelfläche aufweist. Ebenso ist die radial innere Mantelfläche im wesentlichen zylindrisch. Der Füllring kann auch in diesem Fall wie zu den oben genannten Ausführungsbeispieln beschrieben - mit oder ohne Festigkeitsträger - ausgebildet werden.

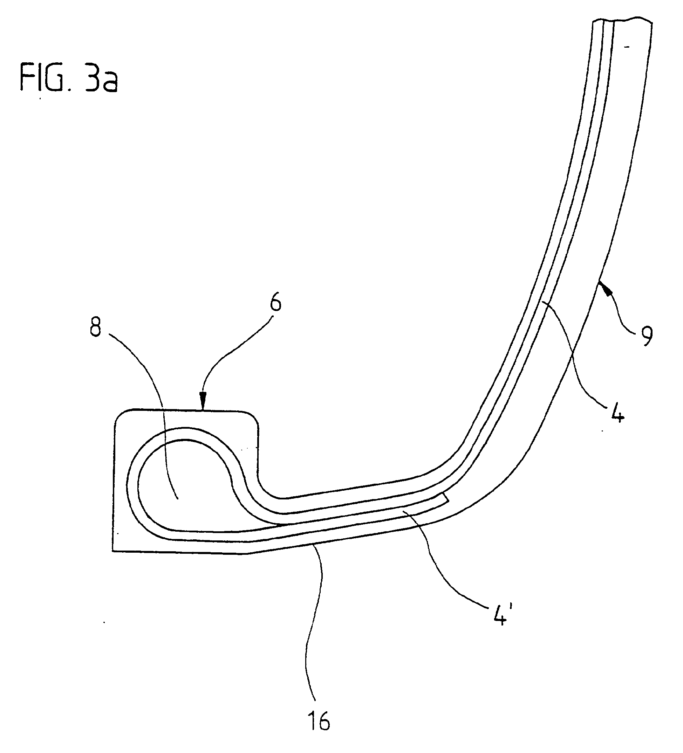

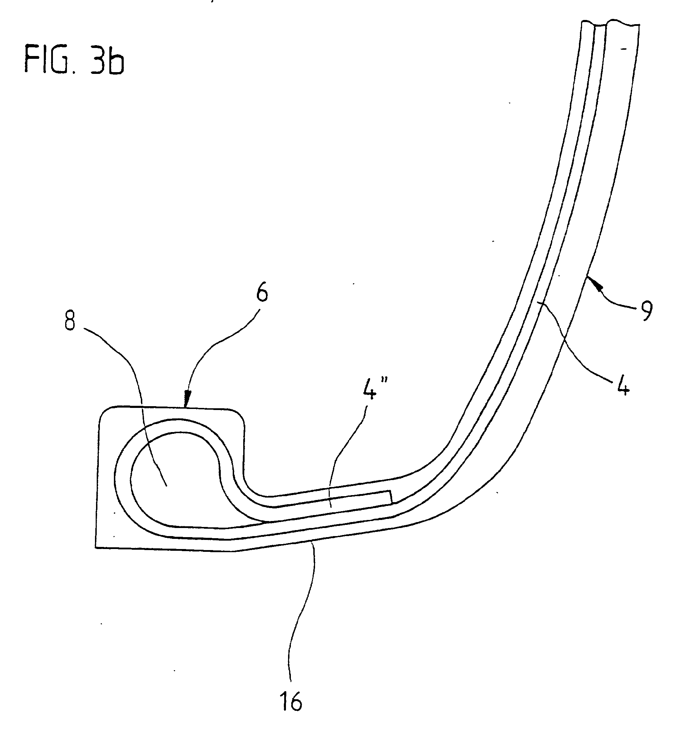

Der Wulstkern 8 wird, wie in den Fig.1,2 und 3a dargestellt ist, durch Einbettung des Kerns 8 in die Karkasse 4 durch Umschlag der Karkasse 4 um den Kern von innen nach außen oder, wie im Ausführungsbeispiel von Fig. 3b dargestellt ist, von außen nach innen verankert. Die Karkasse 4 ist eng um den Kern 8 gewickelt und der Umschlag 4' ist ebenso wie im anderen Ausführungsbeispiel der Umschlag 4" im Anschluß an den Kern 8 in unmittelbarem Kontakt zum Hauptteil der Karkasse. Der Kern 8 ist tröpfchenförmig zum Berührungspunkt zwischen Umschlag und Hauptteil der Karkasse verjüngt ausgebildet. Zur Ausbildung des Kerns 8 wird ein elastisches Gummimaterial mit einer Shore-A-Härte von 80 bis 100, vorzugsweise 85 bis 90 - im Ausführungsbeispiel von Figur 1 mit einer Shore-A-Härte von 87- gewählt, das eine elastische Dehnbarkeit in Umfangsrichtung des Kerns von 5 bis 30%, für Standard-Reifendimensionen von 10 bis 20%, und eine elastische Stauchbarkeit von1 bis 5%, für Standard-Reifendimensionen von 2,5 bis 3,5 Prozent, aufweist.

Der Kern wird durch Extrusion durch injection moulding oder vergleichsweise bekannte Techniken hergestellt.

Es ist auch denkbar, den Wulst kernlos auszubilden, wobei auch in diesem nichtdargestellten Ausführungsbeispiel das Gummimaterial des Wulstes so gewählt wird, daß der Wulst die genannten Dehnungs- und Stauchungseigenschaften in Umfangsrichtung aufweist.

Soweit der Abrieb zwischen Felgenhorn und unterer Seitenwand unerwünscht groß wird, ist es möglich, wie in Figur 1 und 2a beispielhaft dargestellt, zusätzlich zwischen Felgenhorn und Wulst einen zusätzlichen Streifen 13 von abriebfestem Material, beispielsweise von abriebfestem Gummi oder Kunststoff auszubilden. Der abriebfeste Streifen kann bis in die Ringkammer reichen und dort um den Wulst umgeschlagen sein.

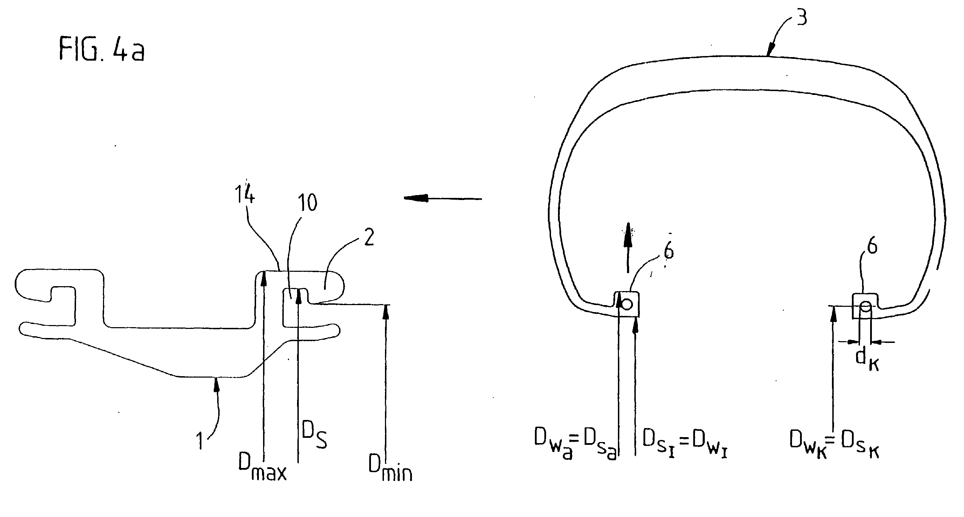

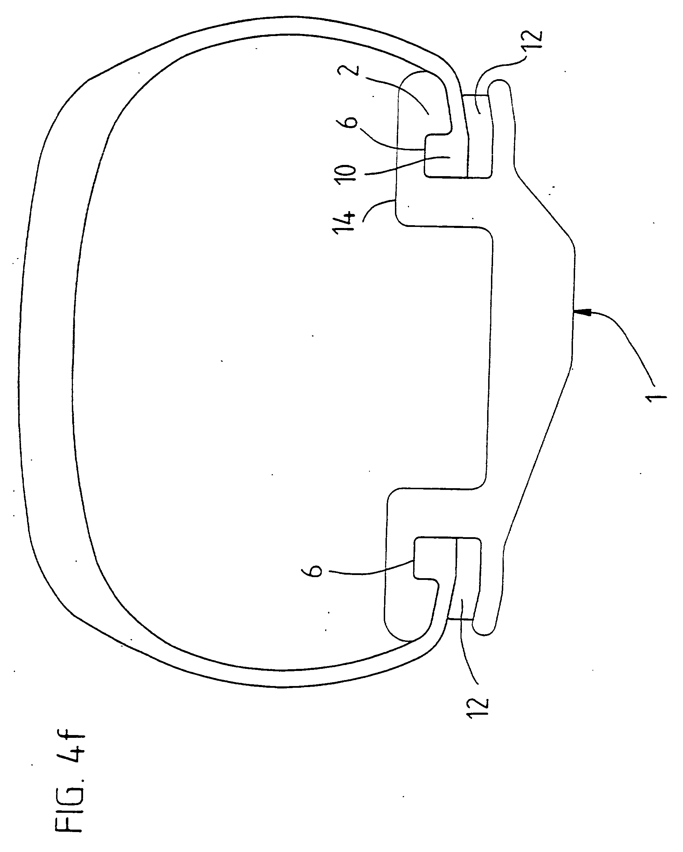

Anhand der schematischen Darstellungen der Figuren 4a bis 4e wird im Folgenden die Montage des Reifens auf einer Felge beschrieben. Die Notlaufstützflächen 14 weisen einen maximalen Außendurchmesser Dmax, die beiden Felgenhörner einen minimalen Innendurchmesser Dmin auf. Der Reifenwulst ist in Fig.4a im ungedehnten und ungestauchten Zustand. Sein Außendurchmesser Dwa entspricht dem Durchmesser der radial äußeren Ringkammerwand 22 und somit dem äußeren Durchmesser des Wulstes Dsa in dessen Sitzposition in der Ringkammer. Sein Innendurchmesser Dwi entspricht dem Durchmesser der radial äußeren Mantelfläche des Füllrings 12 in der Ringkammer und somit dem inneren Durchmesser des-Wulstes Dsi in dessen Sitzposition in der Ringkammer. Der Kern mit einer Dicke d, beispielsweise ist d= 10mm, in radialer Richtung hat in der radialen Position der halben radialen Dicke einen mittleren Kerndurchmesser Dwk durch die Reifenachse, der dem mittleren Kemdurchmesser Dsk in der Sitzposition des Wulstes in der Ringkammer entspricht. Dmax ist größer als Dsa, Dsa ist größer als Dsk, Dsk ist größer als Dmin, Dmin ist größer als Dsi.

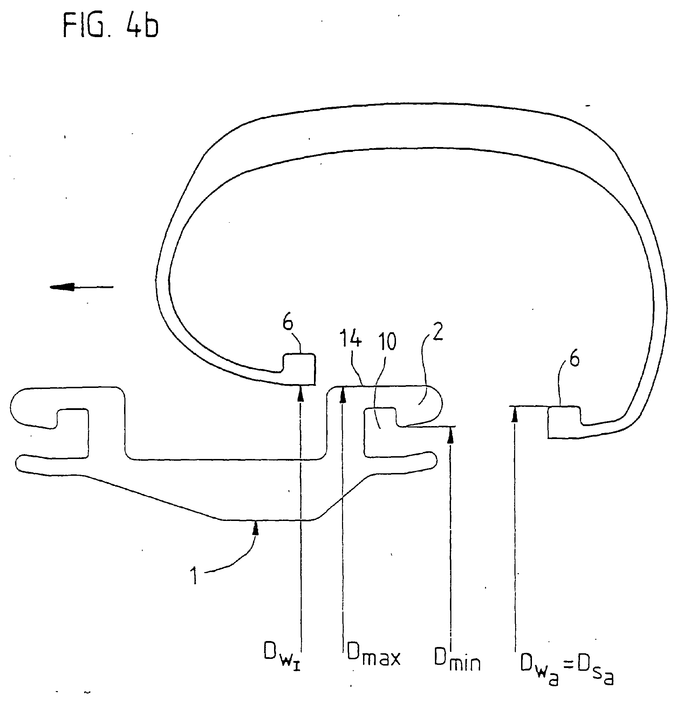

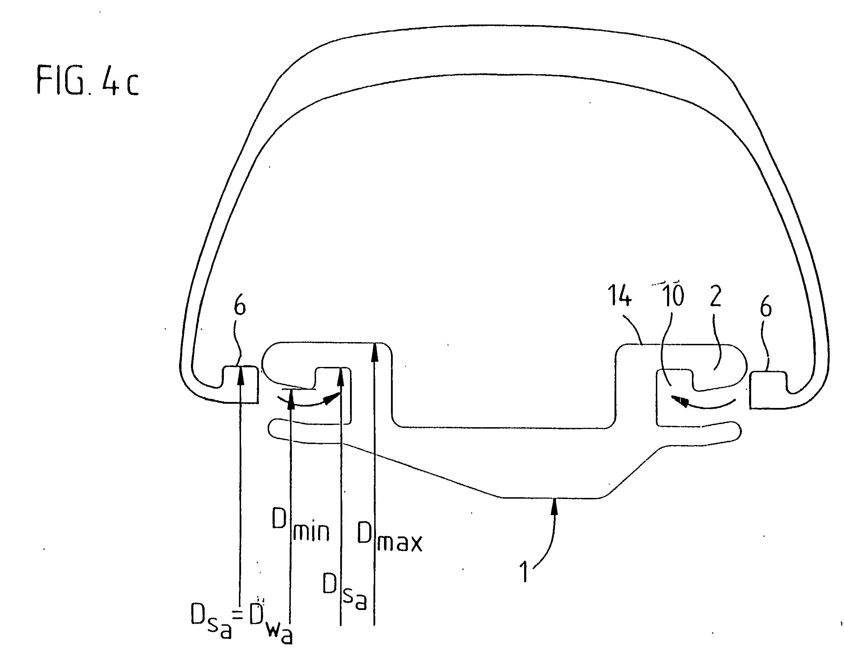

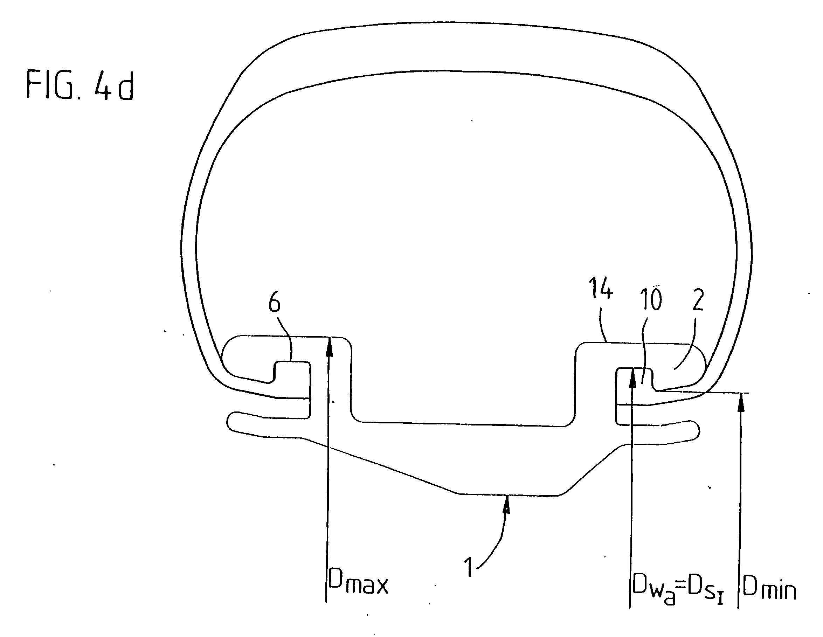

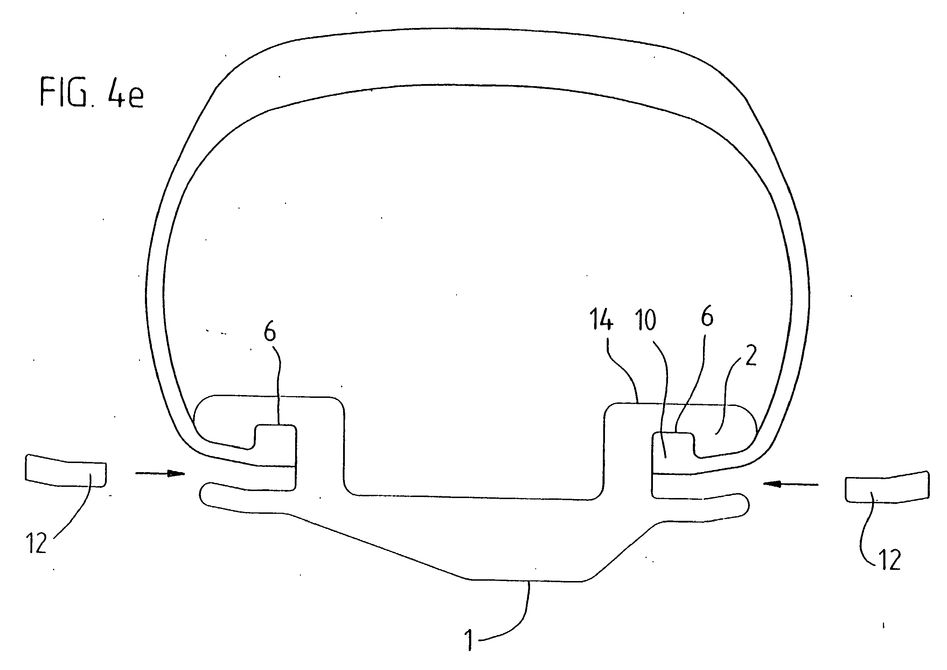

Zur Montage wird der Reifen 3 konzentrisch zur Felge an die Felge in den Figuren von rechts axial herangeführt. Der linke Wulst wird entgegen der elastischen Rückstellkräfte des Wulstes in Umfangsrichtung soweit gedehnt, daß der Innendurchmesser Dwi des Wulstes größer als der maximale Außendurchmesser Dmax der Notlaufstützflächen ist. Danach wird, wie in Figur 4b dargestellt ist , der Reifen 3 weiter konzentrisch zur Felge axial zur Felge hinbewegt, wobei der linke Wulst unter Beibehaltung seines gedehnten Zustandes mit Spiel zu den Notlaufstützflächen 14 axial über die Felge geschoben wird. Sobald der linke Wulst eine Position auf der linken Seite axial außerhalb des linken Felgenhorns erreicht hat wird der Wulst unter Ausnutzung der elastischen Rückstellkräfte wieder in seiner Umfangslänge soweit zurückgestellt, daß er wieder den ungedehnten und ungestauchten Zustand einnimmt. In diesem Zustand entspricht Dwi wieder Dsi, Dwa wieder Dsa und Dwk entspricht ebenfalls wieder dem mittleren Durchmesser Dsk des Kerns in dessen Sitzposition in der Ringkammer. Wie durch die Pfeildarstellung von Fig 4c dargestellt, werden beide Wülste nun entgegen der elastischen Rückstellkräfte in ihrer Umfangslänge soweit gestaucht, daß der Außendurchmesser Dwa des Wulstes kleiner als der minimale Felgenhorndurchmesser Dmin ist.In diesem Zustand werden die Wülste mit Spiel zum Felgenhorn axial in die jeweilige Ringkammer eingeführt. Unter Ausnutzung der elastischen Rückstellkräfte werden die Wülste wieder in ihrer Umfangslänge soweit zurückgestellt, daß sie wieder den ungedehnten und ungestauchten Zustand einnehmen, In diesem Zustand entspricht Dwi wieder Dsi, Dwa wieder Dsa und Dwk entspricht ebenfalls wieder dem mittleren Durchmesser Dsk des Kerns in dessen Sitzposition in der Ringkammer. Die Wülste sitzen ungedehnt und ungestaucht in der Ringkammer. Dieser Zustand ist in Fig.4d dargestellt.
Wie in Fig4e dargestellt ist, wird nun jeweils ein Füllring 12 von axial außen zwischen unterem Seitenwandbereich 16 des Reifens und Lagerfläche 30 axial soweit eingeführt, daß die Ringkammer vollständig von Wulst und Füllring ausgefüllt ist. Der vollständige Formschluß zwischen einstückiger Ringkammer und Wulst ist hergestellt.

Zur Demontage wird entsprechend zunächst der Füllring axial nach außen entfernt. Danach werden die Wülste soweit gestaucht, daß sie mit Spiel zum Felgenhorn aus der Ringkammer gezogen werden können. Nach der Rückstellung der Umfangslänge wird ein Wulst soweit gedehnt, daß er mit Spiel zu den Notlaufstützflächen axial von der Felge gezogen werden kann.

Es ist auch denkbar, den Reifen zur Montage anstatt ihn axial zu verschieben, zunächst um 90 ° zu drehen und dann zu dehnen und im gedehnten Zustand in radialer Richtung auf die Felge zu schieben, um ihn dort wieder um 90 ° zurückzudrehen, so daß sich die beiden Wülste jeweils axial außerhalb der Felge befinden. Die weitere Montage erfolgt wie oben beschrieben.

Im einem Ausführungsbeispiel ist der Durchmesser Dmax beispielsweise um das 1,2-fache größer als der Innendurchmesser Dsi des Wulstes in der Sitzposition in der Ringkammer und der minimale Felgenhorndurchmesser ist um den Faktor 1,025 kleiner als der Außendurchmesser Dsa des Wulstes in der Sitzposition in der Ringkammer. Als Gummimaterial des Wulstes wird ein Gummimaterial mit einer Dehnungsfähigkeit und mit einer Stauchbarkeit gewählt, die ein solches Dehnen und Stauchen des Wulstes in Umfangsrichtung erlauben, daß der Wulst über die Notlaufstützfläche 14 und in die Ringkammer mit Spiel axial bewegt werden können. Beispielsweise wird ein bekanntes Gummimaterial verwendet, das eine Umfangsdehnung des Wulstes um 25% und eine Umfangsstauchung um 2,7% ermöglichen.

Die Notlaufstützflächen können auch mit einem größeren oder kleineren maximalen Außendurchmesser Dmax entsprechend den individuell einzustellenden Notlaufeigenschaften eines Reifens ausgebildet sein. Der maximale Durchmesser Dmax der Notlaufstützflächen ist dabei bei Standardreifen optimalerweise um einen Faktor1,1 bis 1,2 größer als der Innenringdurchmesser Dsi des Wulstkerns im montierten Zustand des Fahrzeugrades. Er kann in Spezialfällen jedoch auch um einen Faktor zwischen 1,05 und 1,3 größer sein als der Innenringdurchmesser Dsi des Wulstkerns im montierten Zustand des Fahrzeugrades. Als Gummimaterial des Wulstes wird hierfür jeweils ein Gummimaterial mit einer Dehnungsfähigkeit und mit einer Stauchbarkeit gewählt, die ein solches Dehnen und Stauchen des Wulstes in Umfangsrichtung erlauben, daß der Wulst über die Notlaufstützfläche 14 und in die Ringkammer mit Spiel axial bewegt werden können. Dementsprechend wird der Wulst, der im montierten Zustand des Fahrzeugrades ungedehnt und ungestaucht ist, derart ausgebildet, daß er eine Dehnbarkeit zwischen 10 und 20 % und eine Stauchbarkeit von 2,5 bis 3,5 % bei Standardreifen und in den Spezialfällen eine Dehnbarkeit zwischen 5 und 30 % und eine Stauchbarkeit zwischen aufweist 1 bis 5% aufweist.

Es ist auch denkbar nach Einführen des Wulstes in die Ringkammer einen Füllring durch Einpritzen von aushärtbarem Kunststoffmaterial von axial außen durch die Öffnung der Ringkammer einzubringen.

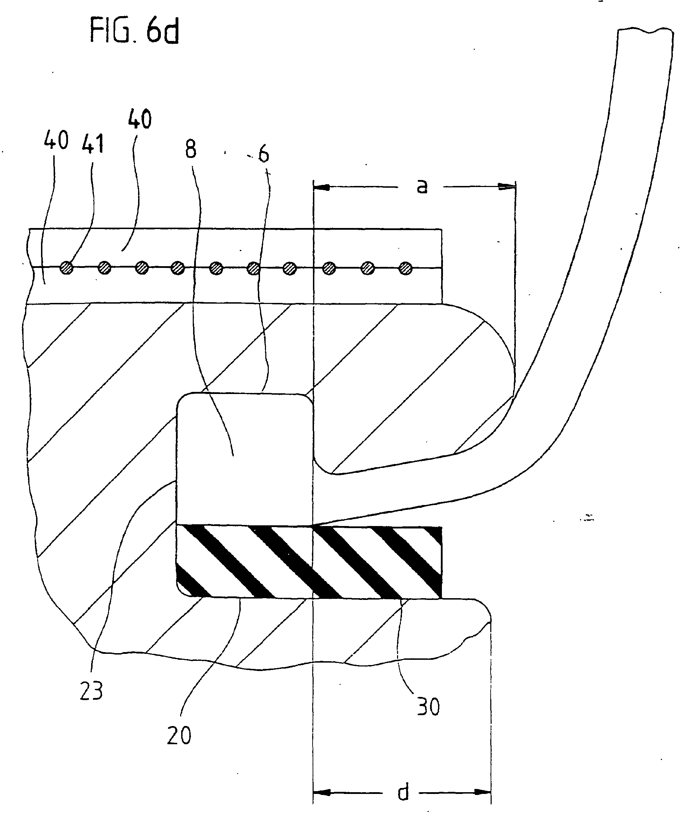

Es ist auch denkbar, einen Notlaufsattel auf der radial äußeren Mantelfläche auszubilden, dessen Notlaufstützfläche sich über den gesamten axialen Mittenbereich der Felge erstreckt. Auch diese Notlaufstützfläche kann entsprechend der Beschreibung zur Darstellung von Fig.5 bzw Fig6 hergestellt werden. Diese Notlaufstützfläche kann beispielsweise über die gesamte axiale Gürtelbreite des Reifens ausgebildet sein.

### Bezugszeichenliste

- 1: Felge
- 2: Felgenhorn
- 3: Fahrzeugluftreifen
- 4: Karkasse
- 5: Gürtel
- 6: Wulstbereich
- 7: Verdickung
- 8: Kern
- 9: Seitenwand
- 10: Ringkammer
- 11: Notlaufsattel
- 12: Füllring
- 13: Abriebfester Streifen
- 14: Notlaufsatteloberfläche
- 15: Lauffläche
- 16: unterer Seitenwandbereich
- 17: Festigkeitsträger
- 20: Ringkammerwand
- 21: Ringkammerwand
- 22: Ringkammerwand
- 23: Ringkammerwand
- 24: Ringöffnung
- 25: Innenseite des Felgenhorns
- 26: Stirnfläche des Felgenhorns
- 30: Lagerfläche
- 40: Notlaufstützschicht
- 41: Festigkeitsträger

## Patentansprüche

1. Feige eines Fahrzeugrades für schlauchlose Luftreifen mit auf der radial äußeren Mantelfläche der Felge (1) ausgebildeter Notlaufstüzfläche,
wobei die Notlaufstützfläche aus einer auf eine tragende Metallstruktur (11) aufvulkanisierten ringförmigen Schicht (40) aus Gummi, gummiähnlichen Stoffen oder Kunststoff ausgebildet ist,
**dadurch gekennzeichnet,**
**dass** in der aufvulkanisierten ringförmigen Schicht (40) aus Gummi, gummiähnlichen Stoffen oder Kunststoff wenigstens eine Lage von parallel zueinander angeordneten faden- oder bandförmigen Festigkeitsträgern (41) ausgebildet ist.

2. Felge gemäß den Merkmalen von Anspruch 1,
- wobei die Festigkeitsträger (41) Monofilamente oder Multifilamente - insbesondere textiler Art oder Stahl - sind.
- wobei die Festigkeitsträger (41) vorzugsweise aus Nylon oder einem anderen wärmeschrumpffähigen Material ausgebildet sind.

3. Felge gemäß den Merkmalen von Anspruch 1 oder 2,
- wobei die Festigkeitsträger (41) wenigstens eine Lage von parallel zueinander angeordneten Festigkeitsträgern (41) aufweisen, die insbesondere sich über den Umfang der Felge (1) erstrecken und mit einem Winkel von 0 bis 30 ° zur Umfangsrichtung der Felge (1) ausgerichtet sind.

4. Felge gemäß den Merkmalen von Anspruch 3,
- wobei die Festigkeitsträger (41) einen oder mehrere kontinuierlich sich über den Umfang der Felge (1) erstreckenden wendelförmig mit einem Winkel von 0 bis 30 ° zur Umfangsrichtung der Felge (1) gewickelten Festigkeitsträger (41) aufweisen.

5. Felge gemäß den Merkmalen von einem oder mehreren der vorangegangenen Ansprüche,
- wobei die Felge (1) selbst die tragende Metallstruktur (11) bildet.

6. Felge gemäß den Merkmalen von Anspruch 5,
- wobei die Felge (1) einstückig ausgebildet ist.

7. Felge gemäß den Merkmalen von einem oder mehreren der vorangegangen Ansprüche,
- mit wenigstens in einer axialen Stirnseite der Felge (1) zur Aufnahme des Reifenwulstes zur Befestigung des Reifens auf der Felge (1) einstückig ausgebildeter Ringkammer (10) mit einer radial inneren, einer radial äußeren, einer axial zur Felgenmitte hin inneren und einer axial zur Felgenaußenseite hin äußeren Ringkammerwand, die nach axial außen zur Stirnseite der Felge (1) hin im radial äußeren Bereich als ein radial nach innen gerichtetes Felgenhorn ausgebildet und in ihrem radial inneren Bereich mit einer ringförmigen Durchgangsöffnung zum Einführen bzw Ausführen des Reifenwulstes ausgebildet ist.

8. Fahrzeugrad mit - insbesondere einteiliger - Felge(1) und schlauchlosem Luftreifen, das für Notlauf geeignet ist,
wobei die Felge (1) gemäß den Merkmalen von einem oder mehreren der vorangegangenen Ansprüche ausgebildet ist.

9. Fahrzeugrad gemäß den Merkmalen von Anspruch 8,
- mit auf der radial äußeren Mantelfläche der Felge (1) ausgebildeter Notlaufstützfläche
- mit an jeder Seitenwand des Luftreifens zur Innenseite des Luftreifens hin verdickt ausgebildetem Wulst zur Befestigung des Luftreifens an der Felge (1),
- mit wenigstens in einer axialen Stirnseite der Felge (1) einstückig ausgebildeter Ringkammer (10) mit einer radial inneren, einer radial äußeren, einer axial zur Felgenmitte hin inneren und einer axial zur Felgenaußenseite hin äußeren Ringkammerwand, die nach axial außen zur Stirnseite der Felge (1) hin im radial äußeren Bereich als ein radial nach innen gerichtetes Felgenhorn ausgebildet und in ihrem radial inneren Bereich mit einer ringförmigen Durchgangsöffnung ausgebildet ist,
- wobei ein Füllring (12) innerhalb der Ringkammer (10) auf der radial inneren Ringkammerwand formschlüssig radial fest gelagert ist,
- wobei die Seitenwand des Reifens sich zumindest im Betriebszustand des Fahrzeugrades von axial außen durch die Öffnung in der axial außen ausgebildeten Ringkammerwand hindurch nach innen erstreckt und der Wulst in der Ringkammer (10) auf der radialen Außenseite des Füllrings(12) radial fest gelagert ist und formschlüssig zumindest nach radial außen und nach axial außen zur Ringkammer (10) ausgebildet ist, so dass der Wulst nach radial außen, nach axial außen, nach axial innen und über den Füllring (12) nach radial innen formschlüssig mit der Felge (1) verbunden ist,
- wobei der Wulst insbesondere über seine ganze axiale Erstreckung nach radial innen vollständig auf dem Füllring (12) aufliegt.

10. Fahrzeugrad gemäß den Merkmalen von Anspruch 8 oder 9,
- wobei der Wulst zur Befestigung des Luftreifens an der Felge (1) in seiner Umfangslänge - insbesondere elastisch - veränderbar ausgebildet ist.

11. Fahrzeugrad gemäß den Merkmalen von einem oder mehreren der vorangegangenen Ansprüche,
wobei die axiale Position einer in der radial äußeren Mantelfläche ausgebildeten Notlaufstützfläche zumindest teilweise der axialen Position des in der Felge (1) befestigten Wulstes entspricht.

12. Fahrzeugrad gemäß den Merkmalen von einem oder mehreren der vorangegangenen Ansprüche,
wobei auf wenigstens einem axialen Seitenbereich der radial äußeren Mantelfläche der Felge (1) eine Notlaufstützfläche ausgebildet ist, die sich insbesondere axial soweit nach innen erstreckt, daß der Gürtel in seiner axialen Randzonen von der Schulter mit 10 bis 30 % überdeckt ist.

13. Fahrzeugrad gemäß den Merkmalen von einem oder mehreren der vorangegangenen Ansprüche,
wobei im Wulst ein Gummikern (8) integriert ausgebildet ist,
wobei der Gummikern (8) insbesondere mit einer Shore -A- Härte aus dem Bereich von 80 bis 100, bevorzugt aus dem Bereich zwischen 85 bis 90 ausgebildet ist.

14. Fahrzeugrad gemäß den Merkmalen von einem oder mehreren der vorangegangenen Ansprüche,
wobei der Füllring (12) zum Lösen und/oder zum Befestigen des Wulstes axial bewegbar ausgebildet ist,
wobei die Ringkammer (10) an ihrer radial inneren Seite über ihre gesamte axiale Erstreckung als Lagerfläche zum axialen Aufschieben und zum axialen Abziehen des Füllrings (12) ausgebildet ist und
wobei der Füllring (12) an seiner radial inneren Seite als korrespondierende Lagerfläche ausgebildet ist.

15. Fahrzeugrad gemäß den Merkmalen von einem der vorangegangenen Ansprüche,
bei dem der maximale Durchmesser der Notlaufstützflächen um einen Faktor zwischen 1,05 und 1,3 - insbesondere zwischen 1,1 und 1,2 - größer als der Innenringdurchmesser des Wulstkerns (8) im montierten Zustand des Fahrzeugrades beträgt.

16. Fahrzeugrad gemäß den Merkmalen von einem der vorangegangenen Ansprüche,
wobei der Wulstkern (8) eine Dehnbarkeit und/oder Stauchbarkeit von 5 bis 30 % - insbesondere 10 bis 20 % - aufweist.

17. Fahrzeugrad gemäß den Merkmalen von einem der vorangegangenen Ansprüche,
wobei der Wulstkern eine Dehnbarkeit von 5 bis 30 % -insbesondere 10 bis 20 % - und eine Stauchbarkeit von 1 bis 5% - insbesondere von 2,5 bis 3,5 % - aufweist und
wobei der Wulstkern (8) insbesondere im montierten Zustand des Fahrzeugrades ungedehnt und ungestaucht ist.

18. Fahrzeugrad gemäß den Merkmalen von einem der vorangegangenen Ansprüche,
wobei der Luftreifen mit seinem Wulst an der Felge (1) befestigt ist und im unteren Seitenwandbereich an der Felge (1) anliegt.

19. Verfahren zur Herstellung einer Felge (1) mit Notlaufstützfläche gemäß Anspruch 1,
wobei die Notlaufstützfläche **dadurch** hergestellt wird, dass auf eine tragende Metallstruktur eine ringförmige Schicht aus kautschuk- oder kautschukähnlichen Stoffen oder Kunststoff aufgebaut wird und anschließend vulkanisiert wird, wodurch die ringförmige Schicht an der tragenden Metallstruktur anvulkanisiert,
**dadurch gekennzeichnet,**
**dass** nach Aufbringen einer ersten ringförmigen Schicht aus kautschuk- oder kautschukähnlichen Stoffen oder Kunststoff zunächst auf diese Schicht Festigkeitsträger (41) aufgelegt werden und dann auf diese Schicht Festigkeitsträger (41) eine weitere Schicht aus kautschuk- oder kautschukähnlichen Stoffen oder Kunststoff aufgelegt wird, und dass anschließend der Kautschuk- oder Kautschukähnliche Stoff oder Kunststoff vulkanisiert wird, wodurch die ringförmige Schicht an der tragenden Metallstruktur anvulkanisiert.

20. Verfahren gemäß den Merkmalen von Anspruch 19,
wobei die Festigkeitsträger (41) fadenförmige oder bandförmige Festigkeitsträger (41) sind, die auf die erste ringförmigen Schicht aus kautschuk- oder kautschukähnlichen Stoffen oder Kunststoff zunächst auf diese Schicht Festigkeitsträger (41) aufgewickelt werden.

## Claims

1. Rim of a vehicle wheel for tubeless pneumatic tyres with an emergency-running supporting area formed on the radial outer surface of the rim (1),
with the emergency-running supporting area being composed of an annular layer (40) of rubber, rubber-type material or plastic vulcanized onto a load-bearing metal structure (11),
**characterized in that**
the vulcanized annular layer (40) of rubber, rubber-type material or plastic comprises at least one layer of cord- or tape-shaped reinforcing elements (41) arranged parallel to each other.

2. Rim according to the features of Claim 1,
- with the reinforcing elements (41) being monofilaments or multifilaments, especially of textile or steel,
- with the reinforcing elements (41) preferably being composed of nylon or some other heat-shrinkable material.

3. Rim according to the features of Claim 1 or 2,
- with the reinforcing elements (41) consisting of at least one layer of reinforcing elements (41) arranged parallel to each other, which especially extend over the circumference of the rim (1) and are aligned at an angle of 0 to 30° to the circumferential direction of the rim (1).

4. Rim according to the features of Claim 3,
- with the reinforcing elements (41) comprising one or more reinforcing elements (41) wound in the form of a coil at an angle of 0 to 30° to the circumferential direction of the rim (1) and extending continuously over the circumference of the rim (1).

5. Rim according to the features of one or more of the preceding claims,
- with the rim (1) itself forming the load-bearing metal structure (11).

6. Rim according to the features of Claim 5,
- with the rim (1) being formed as a single piece.

7. Rim according to the features of one or more of the preceding claims,
- with an annular chamber (10) to hold the tyre bead for attaching the tyre to the rim (1), formed intergrally at least in one axial end face of the rim (1), with a radial inner, a radial outer, an inner axially to the centre of the rim and an outer axially to the outside of the rim annular chamber wall that is formed as a radially inwards-aligned rim flange extending axially outwards to the end face of the rim (1) in the radial outer area, and is formed with an annular through opening in its radial inner area for insertion or extraction of the tyre bead.

8. Vehicle wheel with especially a single-piece rim (1) and tubeless pneumatic tyre suitable for emergency running,
with the rim (1) being formed according to the features of one or more of the preceding claims.

9. Vehicle wheel according to the features of Claim 8,
- with an emergency-running supporting area formed on the radial outer surface of the rim (1),
- with a bead for attaching the pneumatic tyre to the rim (1) on each side wall of the pneumatic tyre and thickening towards the inside of the pneumatic tyre,
- with an annular chamber (10) formed as a single piece at least in one axial end face of the rim (1) with a radial inner, a radial outer, an inner axially to the centre of the rim and an outer axially to the outside of the rim annular chamber wall that is formed as a radially inwards-aligned rim flange extending axially outwards to the end face of the rim (1) in the radial outer area, and is formed with an annular through opening in its radial inner area,
- with a filler ring (12) being radially fitted, secured in an interlocking manner, on the radial inner annular chamber wall within the annular chamber (10),
- with the side wall of the tyre, at least in the operating state of the vehicle wheel, extending axially from the outside through the opening in the annular chamber wall, formed axially outwards, through to the inside and with the bead in the annular chamber (10) being radially securely fitted on the radial outside of the filler ring (12) and having an interlock at least radially outwards and axially outwards to the annular chamber (10) so that the bead is connected radially outwards, axially outwards, axially inwards and through the filler ring (12) radially inwards to the rim (1) to provide a form fit,
- with the bead lying radially inwards fully against the filler ring (12), especially over its complete axial extent.

10. Vehicle wheel according to the features of Claim 8 or 9,
- with the bead for attaching the pneumatic tyre to the rim (1) being designed to be variable, especially elastic, in its circumferential length.

11. Vehicle wheel according to the features of one or more of the preceding claims,
with the axial position of an emergency-running supporting area formed in the radial outer surface corresponding at least partially to the axial position of the bead secured in the rim (1).

12. Vehicle wheel according to the features of one or more of the preceding claims,
with an emergency-running supporting area being formed at least on an axial side area of the radial outer surface of the rim (1) that especially axially extends so far inwards that 10 to 30% of the bracing ply is covered in its axial edge zones by the shoulder.

13. Vehicle wheel according to the features of one or more of the preceding claims,
with a rubber core (8) being integrated in the bead,
with the rubber core (8) especially being formed with a Shore A hardness from the region of 80 to 100, preferably from the region between 85 and 90.

14. Vehicle wheel according to the features of one or more of the preceding claims,
with the filler ring (12) for loosening and/or securing the bead being designed to be axially moveable,
with the annular chamber (10) being designed as a bearing area on its radial inner side over its complete axial extent to enable the filler ring (12) to be axially pushed on and axially pulled off and
with the filler ring (12) being formed as a corresponding bearing area on its radial inner side.

15. Vehicle wheel according to the features of one of the preceding claims,
with the maximum diameter of the emergency-running supporting areas being greater than the inner ring diameter of the bead core (8) by a factor of between 1.05 and 1.3, especially between 1.1 and 1.2, with the vehicle wheel fitted.

16. Vehicle wheel according to the features of one of the preceding claims,
with the bead core (8) having an extensibility and/or compressibility of 5 to 30%, especially of 10 to 20%.

17. Vehicle wheel according to the features of one of the preceding claims,
with the bead core having an extensibility of 5 to 30%, especially of 10 to 20% and a compressibility of 1 to 5%, especially of 2.5 to 3.5% with the bead core (8) being unextended and uncompressed especially with the vehicle wheel fitted.

18. Vehicle wheel according to the features of one of the preceding claims,
with the pneumatic tyre being secured by its bead to the rim (1) and lying against the rim (1) in the bottom side wall area.

19. Method for manufacturing a rim (1) with an emergency-running supporting area according to Claim 1, with the emergency-running supporting area being produced in that an annular layer of caoutchouc or material similar to caoutchouc, or plastic is built up on a load-bearing metal structure and is then vulcanized, by which means the annular layer is vulcanized onto the load-bearing metal structure,
**characterized in that**
after a first annular layer of caoutchouc or material similar to caoutchouc, or plastic is applied, reinforcing elements (41) are first applied to this layer and then on this reinforcing element (41) layer a further layer of caoutchouc or material similar to caoutchouc, or plastic is applied, and the caoutchouc or material similar to caoutchouc, or plastic is then vulcanized, thus vulcanizing the annular layer onto the load-bearing metal structure.

20. Method according to the features of Claim 19,
with the reinforcing elements (41) being reinforcing elements (41)in the form of cord, and with these reinforcing elements (41) being wound onto the first annular layer of caoutchouc or material similar to caoutchouc, or plastic, first of all onto this reinforcing element (41) layer.

## Revendications

1. Jante pour une roue de véhicule dotée d'un bandage pneumatique sans chambre à air, avec une surface d'appui de secours réalisée sur la surface d'enveloppe radiale extérieure de la jante (1),
la surface d'appui de secours étant constituée d'une couche (40) de caoutchouc, d'une substance similaire au caoutchouc ou de matière synthétique, de forme annulaire et vulcanisée sur une structure métallique porteuse (11),
**caractérisée en ce qu'**au moins une couche de renfort (41) en fils ou en rubans disposés parallèlement les uns aux autres est formée dans la couche (40) annulaire vulcanisée de caoutchouc, de substance similaire au caoutchouc ou de matière synthétique.

2. Jante selon les caractéristiques de la revendication 1, dans laquelle les renforts (41) sont des monofilaments ou des multifilaments, en particulier en matériau textile ou en acier, les renforts (41) étant réalisés de préférence en nylon ou un autre matériau qui présente une caractéristique de retrait thermique.

3. Jante selon les caractéristiques des revendications 1 ou 2, dans laquelle les renforts (41) présentent au moins une couche de renforts (41) disposés parallèlement les uns aux autres, qui s'étendent en particulier à la périphérie de la jante (1) et qui sont orientés sous un angle de 0 à 30° par rapport à la direction périphérique de la jante (1).

4. Jante selon les caractéristiques de la revendication 3, dans laquelle les renforts (41) présentent un ou plusieurs renforts (41) qui s'étendent de manière continue à la périphérie de la jante (1) sous une forme ondulée à un angle de 0 à 30° par rapport à la direction périphérique de la jante (1).

5. Jante selon les caractéristiques de l'une ou plusieurs des revendications précédentes, dans laquelle la jante (1) forme elle-même la structure métallique porteuse (11).

6. Jante selon les caractéristiques de la revendication 5, dans laquelle la jante (1) est réalisée en une seule pièce.

7. Jante selon les caractéristiques de l'une ou plusieurs des revendications précédentes, qui comprend au moins une chambre annulaire (10) réalisée d'une seule pièce dans un côté frontal axial de la jante (1) pour recevoir le bourrelet du bandage de manière à pouvoir fixer le bandage sur la jante (1), qui présente une paroi de chambre annulaire située radialement à l'intérieur, une paroi de chambre annulaire située radialement à l'extérieur, une paroi de chambre annulaire située axialement du côté intérieur par rapport au milieu de la jante et une paroi de chambre annulaire située axialement à l'extérieur du côté extérieur de la jante, et qui est réalisée sur le côté situé axialement à l'extérieur du côté frontal de la jante (1) et dans la partie située radialement à l'extérieur, sous la forme d'une corne de jante orientée radialement vers l'intérieur, sa zone située radialement à l'intérieur présentant avec une ouverture annulaire de passage qui permet l'insertion ou l'extraction du bourrelet du bandage.

8. Roue de véhicule dotée d'une jante (1), en particulier en une seule pièce et d'un bandage pneumatique sans chambre à air qui permet de rouler après une crevaison, la jante (1) présente les caractéristiques de l'une ou plusieurs des revendications précédentes.

9. Roue de véhicule selon les caractéristiques de la revendication 8, qui présente une surface d'appui permettant de rouler après crevaison et réalisée sur la surface d'enveloppe située radialement à l'extérieur de la jante (1), avec un bourrelet de fixation du bandage pneumatique sur la jante (1) qui est épaissi vers le côté intérieur du bandage pneumatique sur chaque paroi latérale du bandage pneumatique, avec au moins une chambre annulaire réalisée d'un seul tenant dans un côté frontal axial du la jante (1), qui présente une paroi de chambre annulaire située radialement à l'intérieur, une paroi de chambre annulaire située radialement à l'extérieur, une paroi de chambre annulaire située axialement du côté intérieur par rapport au milieu de la jante et une paroi de chambre annulaire située axialement à l'extérieur du côté extérieur de la jante, et qui est réalisée sur le côté situé axialement à l'extérieur du côté frontal de la jante (1) et dans la partie située radialement à l'extérieur, sous la forme d'une corne de jante orientée radialement vers l'intérieur, sa zone située radialement à l'intérieur présentant avec une ouverture annulaire de passage, un anneau de garniture (12) étant monté en correspondance géométrique de manière à être fixé dans le sens radial à l'intérieur de la chambre annulaire (10) sur la paroi située radialement à l'intérieur de la chambre annulaire, tandis qu'au moins lorsque la roue du véhicule est en fonctionnement, la paroi latérale du bandage s'étend axialement vers l'intérieur depuis l'extérieur par l'ouverture ménagée dans la paroi située radialement à l'extérieur de la chambre annulaire, le bourrelet étant monté fixement dans la direction radiale dans la chambre annulaire (10), sur le côté de l'anneau de garniture (12) situé radialement à l'extérieur et étant réalisé en correspondance géométrique sur le côté situé radialement à l'extérieur et sur le côté situé axialement à l'extérieur de la chambre annulaire (10), de telle sorte que le bourrelet soit relié en correspondance géométrique à la jante (1) sur le côté situé radialement à l'extérieur, le côté situé axialement à l'extérieur, le côté situé axialement à l'intérieur et le côté situé radialement à l'intérieur par l'intermédiaire de l'anneau de garniture (12), le bourrelet reposant au moins sur toute son extension axiale sur l'anneau de garniture (12) du côté situé radialement à l'intérieur.

10. Roue de véhicule selon les caractéristiques des revendications 8 ou 9, dans laquelle la forme du bourrelet peut être modifiée sur la longueur de sa périphérie, en particulier élastiquement, pour permettre de fixer le bandage pneumatique sur la jante (1).

11. Roue de véhicule qui présente les caractéristiques de l'une ou plusieurs des revendications précédentes, dans laquelle la position axiale d'une surface d'appui en cas de conduite après crevaison, réalisée dans la surface d'enveloppe située radialement à l'extérieur, correspond au moins en partie à la position axiale du bourrelet fixé dans la jante (1).

12. Roue de véhicule qui présente les caractéristiques d'une ou plusieurs des revendications précédentes, dans laquelle une surface d'appui pour conduite après crevaison, qui s'étend en particulier axialement vers l'intérieur de telle sorte que les zones de bordure axiales de la ceinture soient couvertes par l'épaulement sur 10 à 30 %, est réalisée dans la zone latérale axiale de la surface d'enveloppe située radialement à l'extérieur de la jante (1).

13. Roue de véhicule qui présente les caractéristiques d'une ou plusieurs des revendications précédentes, dans laquelle une âme en caoutchouc (8) est intégrée dans le bourrelet, l'âme en caoutchouc (8) ayant en particulier une dureté shore-A comprise dans la plage de 80 à 100 et de préférence dans la plage de 85 à 90.

14. Roue de véhicule qui présente les caractéristiques d'une ou plusieurs des revendications précédentes, dans laquelle l'anneau de garniture (12) peut être déplacé axialement pour libérer et/ou fixer le bourrelet, la chambre annulaire (10) présentant sur son côté situé radialement à l'intérieur et sur toute son extension axiale une surface de montage qui permet le coulissement axial et l'enlèvement axial de l'anneau de garniture (12), l'anneau de garniture (12) étant réalisé sous la forme d'une surface correspondante de montage sur son côté situé radialement à l'intérieur.

15. Roue de véhicule qui présente les caractéristiques de l'une des revendications précédentes, dans laquelle le diamètre maximum de la surface d'appui permettant la conduite après crevaison est augmenté d'un facteur compris entre 1,05 et 1,3 et en particulier entre 1,1 et 1,2 par rapport au diamètre de l'anneau intérieur de l'âme (8) du bourrelet lorsque la roue du véhicule est montée.

16. Roue de véhicule qui présente les caractéristiques de l'une des revendications précédentes, dans laquelle l'âme (8) du bourrelet présente un allongement et/ou un écrasement de 5 à 30 % et en particulier de 10 à 20 %.

17. Roue de véhicule qui présente les caractéristiques de l'une des revendications précédentes, dans laquelle l'âme du bourrelet a un allongement de 5 à 30 % et en particulier de 10 à 20 % et une compression de 1 à 5 % et en particulier de 2,5 à 3,5 %, et dans laquelle l'âme (8) du bourrelet n'est ni dilatée ni comprimée lorsque la roue du véhicule est montée.

18. Roue de véhicule qui présente les caractéristiques de l'une des revendications précédentes, dans laquelle le bandage pneumatique est fixé sur la jante (1) par son bourrelet et repose sur la jante (1) par sa paroi latérale inférieure.

19. Procédé de fabrication d'une jante (1) qui présente une surface d'appui qui permet la conduite après crevaison, selon la revendication 1, dans laquelle la surface d'appui qui permet la conduite après crevaison est réalisée en appliquant sur une structure métallique une couche annulaire constituée de caoutchouc, de matériaux similaires au caoutchouc ou de matière synthétique et est ensuite vulcanisée, ce qui vulcanise la couche annulaire sur la structure métallique porteuse,
**caractérisé en ce qu'**après application d'une première couche annulaire de caoutchouc, de matières similaires au caoutchouc ou de matière synthétique, des renforts (41) sont d'abord appliqués sur cette couche, une autre couche de caoutchouc, de matières similaires au caoutchouc ou de matière synthétique étant appliquée sur cette couche de renfort (41), le caoutchouc, la substance similaire au caoutchouc ou la matière synthétique étant ensuite vulcanisé, la couche annulaire étant ainsi vulcanisée sur la structure métallique porteuse.

20. Procédé qui présente les caractéristiques de la revendication 19, dans lequel les renforts (41) sont des renforts (41) en fils ou en rubans, ces renforts (41) étant enroulés d'abord sur la première couche annulaire en caoutchouc, en substance similaire au caoutchouc ou en matière synthétique.
